# EUROPEAN PATENT APPLICATION

(11) **EP 4 611 334 A1**
(43) Date of publication of application: **03.09.2025**
(21) Application number: 23881563.3
(22) Date of filing: 25.09.2023
(51) Int. Cl.: H04L 41/0813

(54) **MAINTENANCE METHOD, DEVICE AND APPARATUS FOR NETWORK NODE INFORMATION, AND STORAGE MEDIUM**

(30) Priority: 26.10.2022 CN 202211321656
(71) Applicant: Datang Mobile Communications Equipment Co., Ltd., Beijing 100085 (CN)
(72) Inventor: SONG, Yaqin, Beijing 100085 (CN); CHENG, Zhimi, Beijing 100085 (CN)
(74) Representative: Studio Torta S.p.A.
(86) International application number: PCT/CN2023/121259
(87) International publication number: WO 2024/087984

(57) **Abstract**

The present disclosure provides a maintenance method, device and apparatus for network node information and a storage medium, and relates to the field of communication technologies. In the present disclosure, a target network node receives, after determining that its own node has been started up, a node state message sent by another network node; where the node state message is sent by the another network node after it is started up. The target network node updates currently maintained first network node information based on the node state message; where the first network node information includes a topology relationship of started-up nodes and corresponding node service information. The target network node receives the node state message from the another network node and updates and maintains the first network node information, so that the started-up network nodes perform data communication between network nodes based on network node information, which achieves a plug and play mechanism between the network nodes, and avoids the problem of the network nodes being unable to cooperate normally due to the network nodes splitting.

## Description

### CROSS REFERENCE TO RELATED APPLICATIONS

The present disclosure claims priority to Chinese patent application No. 202211321656.4, filed with the China National Intellectual Property Administration on October 26, 2022, and entitled with "MAINTENANCE METHOD, DEVICE AND APPARATUS FOR NETWORK NODE INFORMATION, AND STORAGE MEDIUM", which is hereby incorporated by reference in its entirety.

### TECHNICAL FIELD

The present disclosure relates to the field of communication technologies and, in particular, to a maintenance method, device and apparatus for network node information, and a storage medium.

### BACKGROUND

With the development of the internet, mobile communication networks will gradually face to diverse scenarios including space, sky, earth, and ocean, and network performance requirements. However, the native design of the network architecture of the current 5th Generation Mobile Communication Technology (5th Generation Mobile Communication Technology, 5G) and previous generations of mobile communication networks are centrally controlled and cannot meet all scenarios uniformly. Therefore, in order to achieve that the network faces to the diverse scenarios including the space, the sky, the earth, and the ocean, and network performance requirements, a 6th generation mobile communication technology (6th Generation Mobile Networks, 6G) mobile communication network is provided.

The development trend of 6G mobile communication network is a network architecture that combines centralized and distributed networks, which extends more network element functions to the network edge and constructs distributed homogeneous network nodes with different functional levels. Each network node is self-contained and has all functions of complete control and data forwarding. Multiple network nodes can form micro networks with different capabilities according to business requirements, and provide targeted network services based on specific business scenarios, user sizes, geographic environments, and other requirements. Therefore, in order to obtain micro networks with different capabilities, it is necessary to achieve a plug and play mechanism between the network nodes. However, currently, there is no solution to achieve a plug and play mechanism between the network nodes in the network architecture of 6G mobile communication network.

Therefore, how to achieve a plug and play mechanism between network nodes in a distributed network architecture of 6G mobile communication network is currently a technical problem that needs to be solved.

### SUMMARY

The present disclosure provides a maintenance method, device, and apparatus for network node information and a storage medium, to achieve a plug and play mechanism between network nodes, and to avoid the problem of the network nodes being unable to cooperate normally due to the network nodes splitting.

In a first aspect, an embodiment of the present disclosure provides a maintenance method for network node information, including:
receiving, by a target network node after determining that its own node has been started up, a node state message sent by another network node; and
updating, by the target network node, currently maintained first network node information based on the node state message; where the first network node information includes a topology relationship of started-up nodes and corresponding node service information.

In an optional implementation, the target network node determines that its own node has been started up by the following manner:
if the target network node confirms that a first node auto register (Node Auto Register, NAR) function is started up after at least one first specific network element function is started up, then determining that its own node has been started up; where the first specific network element function includes at least one of a control management function or a data forwarding function; or
if the target network node confirms that the at least one first specific network element function is started up after the first NAR function is started up, then determining that its own node has been started up.

In an optional implementation, the confirming, by the target network node, that the at least one first specific network element function is started up after the first NAR function is started up, includes:
sending, by the target network node, a network element function discovery request message to a first management network element after determining that the first NAR function is started up, and confirming that the at least one first specific network element function is started up based on a received network element function registration state update message sent by the first management network element; where the first management network element supports network element function service management, the network element function discovery request message carries a network element identification list and a state change subscription message for a network element function state to be monitored; or
sending, by the target network node, a state change subscription request message to a first management network element after determining that the first NAR function is started up, and confirming that the at least one first specific network element function is started up based on a received network element function registration state update message sent by the first management network element; where the state change subscription request message carries the network element identification list for the network element function state to be monitored.

In an optional implementation, the receiving, by the target network node after determining that its own node has been started up, the node state message sent by the another network node, includes:
receiving, by the target network node after determining that its own node has been started up, the node state message sent by the another network node through a first target network element supporting a first NAR function;
where the node state message includes at least one of a node registration message, a node deregistration message, a node information update message, or a state monitoring response message.

In an optional implementation, the node registration message carries node service information of the another network node; the node registration message is sent by a second target network element supporting a second NAR function after the another network node determines that its own node has been started up;
where the node service information includes at least one of network node identification information, network node address information, network node attribute information, network node location information, network node service area information, data network information, or slice information.

In an optional implementation, the node state message includes the node registration message, and after the updating, by the target network node, the currently maintained first network node information based on the node state message, the method further includes:
determining, by the target network node, first location information of the another network node relative to the target network node based on the updated topology relationship of the started-up nodes; and
determining, by the target network node, a node registration response message based on the first location information, and sending the node registration response message to the another network node; where the node registration response message includes at least one of node service information of the target network node, node service information of a neighboring network node that is connected to the another network node and has been started up, or a topology relationship of nodes.

In an optional implementation, the node state message includes the node registration message, and after the updating, by the target network node, the currently maintained first network node information based on the node state message, the method further includes:
determining, by the target network node, a neighboring network node that is connected to the another network node and has been started up, and first location information and second location information of the another network node and the neighboring network node respective relative to the target network node based on the updated topology relationship of the started-up nodes; and
determining, by the target network node, a node information update notification based on the first location information and the second location information, and sending the node information update notification to the neighboring network node; where the node information update notification includes at least one of node service information of the another network node, or a topology relationship of nodes.

In an optional implementation, the node deregistration message is sent by a second target network element supporting a second NAR function before the another network node determines deregistration of its own node based on a local policy or a received deregistration instruction.

In an optional implementation, the node state message includes the node deregistration message, and the updating, by the target network node, the currently maintained first network node information based on the node state message, includes:
determining, by the target network node, third location information of the another network node and fourth location information of a neighboring network node that is connected to the another network node and has been started up, based on the currently maintained first network node information; and
determining, by the target network node, a corresponding update strategy based on the third location information and the fourth location information, and updating the currently maintained first network node information by adopting the determined update strategy.

In an optional implementation, the determining, by the target network node, the corresponding update strategy based on the third location information and the fourth location information, includes:
if it is determined that the another network node is directly connected to the target network node, and the neighboring network node is directly connected to the target network node, then disconnecting a connection relationship between the another network node and the target network node, and a connection relationship between the another network node and the neighboring network node;
if it is determined that the another network node is directly connected to the target network node, and the neighboring network node is indirectly connected to the target network node through the another network node, then connecting the neighboring network node to the target network node after disconnecting the connection relationship between the another network node and the target network node, and the connection relationship between the another network node and the neighboring network node; and
if it is determined that the another network node is indirectly connected to the target network node, and the neighboring network node includes a first network node located between the target network node and the another network node and a second network node that is indirectly connected to the first network node via the another network node, then connecting the first network node to the second network node after disconnecting a connection relationship between the another network node and the first network node, and a connection relationship between the another network node and the second network node.

In an optional implementation, the node information update message is sent by a second management network element supporting a second NAR function after the another network node determines that node information it maintains has been changed; where a change of the node information include a change of the node service information.

In an optional implementation, the state monitoring response message is sent by the first network node through a second management network element supporting a second NAR function after receiving a state monitoring request message periodically sent by the target network node.

In an optional implementation, the target network node is a centralized network node and/or a distributed network node in a distributed network.

In an optional implementation, each network node in the distributed network judges whether it is a centralized network node by using network node attribute information in the corresponding node service information.

In an optional implementation, if the target network node is a distributed network node, after determining, by the target network node, that it has been started up through the first target network element, the method further includes:
sending, by the target network node, a node registration message carrying node service information of the target network node to any started-up network node in the distributed network.

In a second aspect, an embodiment of the present disclosure provides a maintenance method for network node information, including:
sending, by a first network node after determining that its own node has been started up, a node state message to a target network node, where the first network node is any network node except for the target network node in a distributed network; and
receiving, by the first network node, a target response message sent by the target network node, and performing a corresponding operation based on the target response message; where the target response message is determined by the target network node after updating first network node information based on the node state message, the first network node information includes a topology relationship of started-up nodes and corresponding node service information.

In an optional implementation, the first network node determines that it has been started up by the following manner:
if the first network node confirms that a second NAR function is started up after at least one second specific network element function is started up, then determining that its own node has been started up; where the second specific network element function includes at least one of a control management function or a data forwarding function; or
if the first network node confirms that at least one second specific network element function is started up after the second NAR function is started up, then determining that its own node has been started up.

In an optional implementation, the confirming, by the first network node, that the at least one second specific network element function is started up after the second NAR function is started up, includes:
sending, by the first network node, a network element function discovery request message to a second management network element after determining that the second NAR function is started up, and confirming that the at least one second specific network element function is started up based on a received network element function registration state update message sent by the second management network element; where the second management network element supports network element function service management; the network element function discovery request message carries a network element identification list and a state change subscription message for a network element function state to be monitored; or
sending, by the first network node, a state change subscription request message to a second management network element after determining that the second NAR function is started up, and confirming that the at least one second specific network element function is started up based on a received network element function registration state update message sent by the second management network element; where the state change subscription request message carries the network element identification list for the network element function state to be monitored.

In an optional implementation, the sending, by the first network node after determining that its own node has been started up, the node state message to the target network node, includes:
sending, by the first network node after determining that its own node has been started up, the node state message to the target network node through a second target network element supporting a second NAR function;
where the node state message includes at least one of a node registration message, a node deregistration message, a node information update message, or a state monitoring response message.

In an optional implementation, the node registration message carries node service information of the first network node;
where the node service information includes at least one of network node identification information, network node address information, network node attribute information, network node location information, network node service area information, data network information, or slice information.

In an optional implementation, the node deregistration message is determined by the first network node based on a local policy or a received deregistration instruction.

In an optional implementation, the node information update message is determined by the first network node after determining that node information it maintains has been changed; where a change of the node information include a change of the node service information.

In an optional implementation, the state monitoring response message is determined by the first network node after receiving a state monitoring request message periodically sent by the target network node.

In an optional implementation, the receiving, by the first network node, the target response message sent by the target network node, and performing the corresponding operation based on the target response message, includes:
receiving, by the first network node, the target response message sent by the target network node; where the target response message includes a node registration response message carrying node service information of the target network node, node service information of a neighboring network node adjacent to the first network node, and the topology relationship of nodes; and
updating, by the first network node, currently maintained second network node information based on the target response message; where the second network node information includes a topology relationship with an adjacent node that has been started up and corresponding node service information.

In a third aspect, an embodiment of the present disclosure provides a network device, including: a memory, a transceiver and a processor; where the memory is configured to store a computer program; the transceiver is configured to transmit and receive data under control of the processor; and the processor is configured to read the computer program in the memory and perform the maintenance method for network node information in the first aspect.

In a fourth aspect, an embodiment of the present disclosure provides a network device, including: a memory, a transceiver and a processor; where the memory is configured to store a computer program; the transceiver is configured to transmit and receive data under control of the processor; and the processor is configured to read the computer program in the memory and perform the maintenance method for network node information in the second aspect.

In a fifth aspect, an embodiment of the present disclosure provides a maintenance apparatus for network node information, including:
a receiving module, configured to receive, after determining that its own node has been started up, a node state message sent by another network node; and
an updating module, configured to update currently maintained first network node information based on the node state message; where the first network node information includes a topology relationship of started-up nodes and corresponding node service information.

In a sixth aspect, an embodiment of the present disclosure provides a maintenance apparatus for network node information, including:
a sending module, configured to send, after determining that its own node has been started up, a node state message to a target network node, where the first network node is any network node except for the target network node in a distributed network; and
an execution module, configured to receive a target response message sent by the target network node, and perform a corresponding operation based on the target response message; where the target response message is determined by the target network node after updating first network node information based on the node state message, the first network node information includes a topology relationship of started-up nodes and corresponding node service information.

In a seventh aspect, an embodiment of the present disclosure provides a computer-readable storage medium, where the computer-readable storage medium stores a computer instruction, the computer instruction, when performed by a processor, implements steps of the maintenance method for network node information provided by embodiments of the present disclosure.

The beneficial effects of the present disclosure are as follows.

Embodiments of the present disclosure provide a maintenance method, device, and apparatus for network node information and a storage medium, and relates to the field of communication technologies. In the present disclosure, after determining that its own node has been started up, the target network node receives the node state message sent by another node through the second target network element after the another node is started up, and updates the currently maintained first network node information based on the node state message; the started-up network nodes can perform data communication between network nodes based on the topology relationship of the started-up nodes and the corresponding node service information in the first network node information, so as to achieve a plug and play mechanism between the network nodes, and to avoid the problem of the network nodes being unable to cooperate normally due to the network nodes splitting.

The other features and advantages of the present disclosure will be set forth in the subsequent specification, and parts of them will become apparent from the specification, or may be learned through the implementation of the present disclosure. The purpose and other advantages of the present disclosure can be achieved and obtained through the structure specifically indicated in the written specification, claims, and drawings.

### BRIEF DESCRIPTION OF DRAWINGS

In order to provide a clearer explanation of the technical solution in embodiments of the present disclosure, a brief introduction will be given to the accompanying drawings required for the description of the embodiments below. It is obvious that the accompanying drawings described below are only for some embodiments of the present disclosure. For those ordinarily skilled in the art, other drawings can be obtained based on these drawings without creative efforts.
FIG. 1 is a schematic diagram of a distributed network architecture of a 6G mobile communication network provided by an embodiment of the present disclosure.
FIG. 2 is a schematic diagram of a maintenance system for network node information provided by an embodiment of the present disclosure.
FIG. 3 is a schematic diagram of a topology relationship of started-up nodes provided by an embodiment of the present disclosure.
FIG. 4 is a flowchart of a first manner for determining that its own node has been started up provided by an embodiment of the present disclosure.
FIG. 5 is a flowchart of a second manner for determining that its own node has been started up provided by an embodiment of the present disclosure.
FIG. 6 is a flowchart of a third manner for determining that its own node has been started up provided by an embodiment of the present disclosure.
FIG. 7 is a flowchart of a fourth manner for determining that its own node has been started up provided by an embodiment of the present disclosure.
FIG. 8 is a flowchart for updating network node information based on a node registration message provided by an embodiment of the present disclosure.
FIG. 9 is a schematic diagram of a locally maintained physical topology relationship of nodes provided by an embodiment of the present disclosure.
FIG. 10 is a schematic diagram for updating a first topology relationship of started-up nodes provided by an embodiment of the present disclosure.
FIG. 11 is a schematic diagram for updating a second topology relationship of started-up nodes provided by an embodiment of the present disclosure.
FIG. 12 is a schematic diagram for updating a third topology relationship of started-up nodes provided by an embodiment of the present disclosure.
FIG. 13 is a schematic diagram for updating a fourth topology relationship of started-up nodes provided by an embodiment of the present disclosure.
FIG. 14 is a flowchart for updating network node information based on a node deregistration message provided by an embodiment of the present disclosure.
FIG. 15 is a flowchart of a manner for determining deregistration of its own node provided by an embodiment of the present disclosure.
FIG. 16 is a schematic diagram for updating a fifth topology relationship of started-up nodes provided by an embodiment of the present disclosure.
FIG. 17 is a schematic diagram for updating a sixth topology relationship of started-up nodes provided by an embodiment of the present disclosure.
FIG. 18 is a schematic diagram for updating a seventh topology relationship of started-up nodes provided by an embodiment of the present disclosure.
FIG. 19 is a schematic diagram for updating an eighth topology relationship of started-up nodes provided by an embodiment of the present disclosure.
FIG. 20 is a flowchart for updating network node information based on a node information update message provided by an embodiment of the present disclosure.
FIG. 21 is a flowchart for updating network node information based on a state monitoring response message provided by an embodiment of the present disclosure.
FIG. 22 is a schematic diagram of a maintenance method for network node information provided by an embodiment of the present disclosure.
FIG. 23 is a schematic diagram of another maintenance method for network node information provided by an embodiment of the present disclosure.
FIG. 24 is a structural diagram of a network device provided by an embodiment of the present disclosure.
FIG. 25 is a structural diagram of another network device provided by an embodiment of the present disclosure.
FIG. 26 is a structural diagram of a maintenance apparatus for network node information provided by an embodiment of the present disclosure.
FIG. 27 is a structural diagram of another maintenance apparatus for network node information provided by an embodiment of the present disclosure.

### DESCRIPTION OF EMBODIMENTS

In order to clarify the purpose, technical solution, and beneficial effects of the present disclosure, a clear and complete description of the technical solution in embodiments of present disclosure will be provided below in conjunction with the accompanying drawings in the embodiments of the present disclosure. Obviously, the described embodiments are only a part of the embodiments of the present disclosure, rather than all of them. Based on the embodiments in the present disclosure, all other embodiments obtained by ordinarily skilled persons in this field without creative efforts shall fall within the protection scope of the present disclosure.

The meaning of the word "exemplary" used in the following text is "as an example, implementation, or illustration". Any embodiments illustrated as "exemplary" need not be interpreted as superior or better than other embodiments.

The terms "first" and "second" in the text are only used for descriptive purposes and cannot be understood as expressing or implying relative importance or implying the number of technical features indicated. Therefore, the features containing "first" and "second" may explicitly or implicitly include one or more features. In the description of the embodiment of the present disclosure, unless otherwise specified, the meaning of "multiple" is two or more.

The following is a brief introduction to the design concept of the embodiment of the present disclosure.

The 6G mobile communication network is a network architecture that integrates centralized and distributed networks, which distributes more network element functions to the network edge and constructs distributed homogeneous network nodes with different functional levels. Each network node is self-contained and has all functions of complete control and data forwarding. Multiple network nodes can form micro networks with different capabilities according to business requirements, and provide targeted network services based on specific business scenarios, user sizes, geographic environments, and other requirements, thereby achieving the diverse scenarios including space, sky, earth, and ocean, and network performance requirements.

In order to obtain micro networks with different capabilities in 6G mobile communication network, it is necessary to implement a plug and play mechanism between the network nodes, that is, after registering network nodes, it can mutually discover with another network node and perform data transmission without manual intervention. However, currently, there is no solution to achieve a plug and play mechanism between the network nodes in the network architecture of 6G mobile communication network.

Therefore, how to implement a plug and play mechanism between the network nodes in the network architecture of 6G mobile communication network and avoid the problem of network nodes being unable to cooperate normally due to the network nodes splitting is the technical problem that needs to be solved in the present disclosure.

In view of this, the embodiment in the present disclosure provides a maintenance method, device, apparatus for network node information and a storage medium, which is used to implement a plug and play mechanism between the network nodes in a distributed network architecture of 6G mobile communication network, avoiding the problem of the network nodes being unable to cooperate normally due to the network nodes splitting.

In order to solve the above problems, a new network element function, also known as Network Function (Network Function, NF), namely NAR function, is provided by the embodiment of the present disclosure. It is mainly used to maintain network node information of network node granularity and information exchange between network nodes regarding network node information.

In an optional implementation, another network node determines state of its own node (that is, network node registration, network node deregistration, network node information update, keep-alive, and so on) through a second target network element supporting a second NAR function, and sends a node state message to a target network node through the second target network element supporting the second NAR function.

The target network node receives the node state message sent by the another network node through a first target network element supporting a first NAR function, which is used to update and maintain network node information, that is, being used to update and maintain a node topology relationship and corresponding node service information, network node information is used for visualization of a network node management platform, mutual cooperation between the network nodes, and so on.

In the embodiment of the present disclosure, a target network element supporting a NAR function can be an existing network element of the network node itself proposed by the 5G mobile communication network, for example, the target network element is a Network-function Repository Function (Network-function Repository Function, NRF) network element, that is, the NAR function is set in the NRF network element. It can also be a newly added network element in the network node, which uses an independent network element to achieve the NAR function, for example, the target network element is a NAR network element. Moreover, all network nodes in the distributed network architecture of 6G mobile network communication have the NAR function.

In an optional implementation, firstly, the target network node receives, after determining that its own node has been started up, the node state message sent by the another network node, and updates currently maintained first network node information based on the node state message; where the first network node information includes a topology relationship of started-up nodes and corresponding node service information. And then, the target network node determines a node registration response message and a node information update notification based on the updated first network node information, sends the node registration response message to the another network node respectively, and sends the node information update notification to a neighboring network node that is connected to the another network node and has been started up, so that the another network node updates and maintains its own second network node information, and the neighboring network node updates and maintains its own third network node information; where the second network node information includes the topology relationship between the another network node and the neighboring network node, and corresponding node service information; the third network node information includes a topology relationship corresponding to the neighboring network node and corresponding node service information.

In the present disclosure, all started-up network nodes update and maintain their own network node information to perform data communication between network nodes based on the node topology relationship and corresponding node service information in the network node information it maintains, thereby achieving a plug and play mechanism between the network nodes, avoiding the problem of the network nodes being unable to cooperate normally due to the network nodes splitting.

The preferred embodiments of the present disclosure are described below in conjunction with the accompanying drawings of the specification. It should be understood that the preferred embodiments described herein are only for illustration and explanation of the present disclosure and are not intended to limit the present disclosure. Furthermore, the embodiments and features of the embodiments in the present disclosure may be combined with each other without conflict.

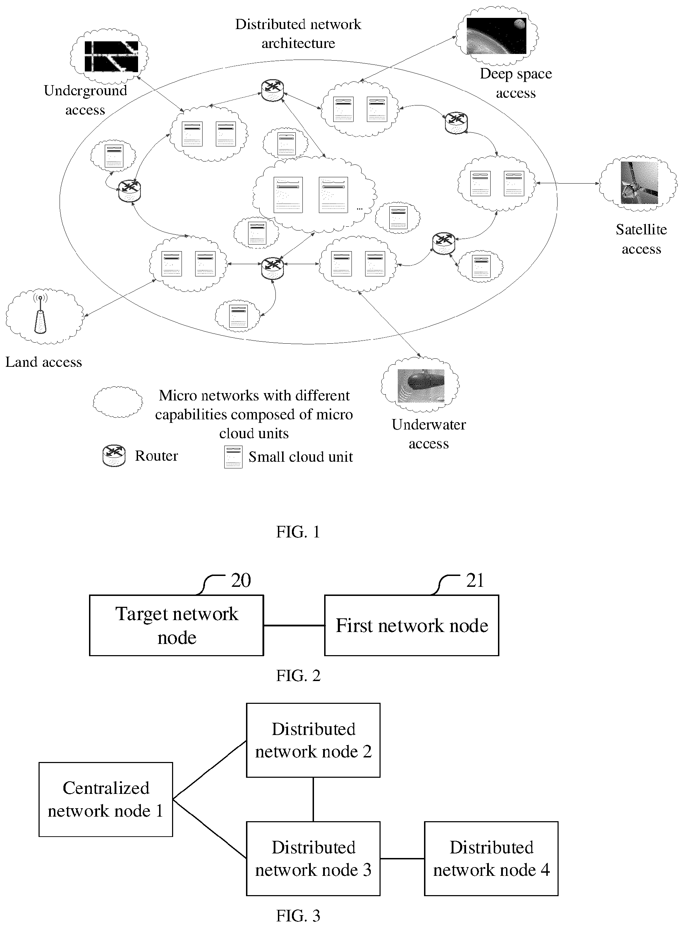

Referring to FIG. 1, FIG. 1 is a schematic diagram of a distributed network architecture of a 6G mobile communication network provided by an embodiment of the present disclosure. The application scenario includes multiple micro networks with different capabilities, for example, micro networks with underground access capability, micro networks with deep space access capability, micro networks with satellite access capability, micro networks with underwater access capability, micro networks with land access capability, etc., so as to achieve to face to the diverse scenarios including the space, the sky, the earth, and the ocean, and network performance requirements. Each micro network has multiple network nodes, which can communicate with each other through a communication network; a network node can be a Small Cloud Unit (Small Cloud Unit, SCU) or a base station; the network node can be a core network node, an access network node, or a network node that has both core network and access network functions.

In an optional implementation, the communication network can be a wired network or a wireless network. Therefore, network nodes can be directly or indirectly connected through wired or wireless communication modes. For example, the network nodes are indirectly connected through wireless access points, or the network nodes are directly connected through the Internet, and the present disclosure does not limit it here.

In an optional implementation, the application scenario also includes a gateway device for connecting multiple micro networks to perform communication between micro networks; where the gateway device can be a router.

In an optional implementation, the application scenario also includes a terminal device, and data transmission and reception are performed between the terminal device and the network node.

The technical solution provided by an embodiment of the present disclosure can be applied to various systems in addition to the 6G distributed network architecture, especially 5G systems. For example, applicable systems may include a global system of mobile communications (Global System of Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide interoperability for Microwave Access, WiMAX) system, a 5G new radio (New Radio, NR) system, etc. All of these systems include a terminal device and a network device. The system can also include core network components, such as an evlved packet system (Evloved Packet System, EPS), a 5G system (5GS), etc.

Terminal devices involved in the embodiments of the present disclosure may refer to devices that provide voice and/or data connectivity to a user, handheld devices with wireless connection capabilities, or other processing devices connected to wireless modems. In different systems, the terminal devices may also vary in their names. For example, in the 5G system, the terminal device can be referred to as a user equipment (User Equipment, UE). A wireless terminal device can communicate with one or more core networks (Core Network, CN) via a radio access network (Radio Access Network, RAN). Wireless terminal devices can be mobile terminal devices, such as a mobile phone (also known as a "cellular" phone) and a computer, such as a portable, a pocket sized, a handheld, a computer built-in, or an in-vehicle mobile device, which exchange language and/or data with the radio access network, for example, devices such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), etc. The wireless terminal devices can also be referred to as a system, a subscriber unit (Subscriber Unit), a subscriber station (Subscriber Station), a mobile station (Mobile Station), a mobile (Mobile), a remote station (Remote Station), an

access point (Access Point), a remote terminal (Remote Terminal), an access terminal (Access Terminal), a user terminal (User Terminal), a user agent (User Agent), and a user device (User Device), which are not limited in the embodiment of the present disclosure.

The base station involved in an embodiment of the present disclosure may include multiple cells providing services to the terminal. Depending on a specific application scenario, the base station can also be referred to as an access point, or it can be a device in an access network that communicates with the wireless terminal device through one or more sectors over an air interface, or other names. The base station can be used to exchange received air frames with internet protocol (Internet Protocol, IP) packets, acting as a router between the wireless terminal device and the rest of the access network which may include an Internet Protocol (IP) communication network. The base station can also coordinate an attribute management of the air interface. For example, the base station involved in the embodiment of the present disclosure may be a base station (Base Transceiver Station, BTS) in the global system for mobile communications (Global System for Mobile communications, GSM) or the code division multiple access (Code Division Multiple Access, CDMA), a base station (NodeB) in the wideband code division multiple access (Wide-band Code Division Multiple Access, WCDMA), an evolutional base station (evolutional Node B, eNB or e-NodeB) in the Long Term Evolution (Long Term Evolution, LTE) system, a 5G base station (gNB) in a 5G network architecture (Next Generation System), a home evolved base station (Home evolved Node B, HeNB), a relay node (Relay Node), a Femto (Femto), a Pico (Pico), etc., which are not limited in the embodiment of the present disclosure. In some network structures, the base station may include a centralized unit (Centralized Unit, CU) network node and a distributed unit (Distributed Unit, DU) network node that can also be arranged geographically separately.

A maintenance method for network node information provided by an exemplary implementation of the present disclosure will be described based on the accompanying drawings in conjunction with the above described application scenarios below. It should be noted that the above application scenarios are only shown for the purpose of facilitating the understanding of the spirit and principles of the present disclosure, and the implementation of the present disclosure are not limited in this regard.

Referring to FIG. 2, FIG. 2 is a structural diagram of a maintenance system for network node information provided by an embodiment of the present disclosure. The system includes a target network node 20 and a first network node 21; where the first network node 21 is any network node except for the target network node in the distributed network, i.e., another network node; where:
the target network node 20 is configured to receive, after determining that its own node has been started up, a node state message sent by the first network node, and update currently maintained first network node information based on the node state message; where the first network node information includes a topology relationship of started-up nodes and corresponding node service information;
the first network node 21 is configured to send, after determining that its own node has been started up, the node state message to the target network node, receive a target response message sent by the target network node, and perform a corresponding operation based on the target response message; where the target response message is determined by the target network node after updating first network node information based on the node state message, the first network node information includes a topology relationship of started-up nodes and corresponding node service information.

In the present disclosure, after determining that its own node has been started up, the target network node receives the node state message sent by other nodes after being started up, and updates the currently maintained first network node information based on the node state message; the started-up network nodes can perform data communication between network nodes based on the topology relationship of the started-up nodes and the corresponding node service information in the network node information, so as to achieve a plug and play mechanism between the network nodes, and to avoid the problem of the network nodes being unable to cooperate normally due to the network nodes splitting.

In an optional implementation, the target network node is a centralized network node (also known as a "central network node") and/or a distributed network node in a distributed network. The first network node is defined relative to the target network node, and is a network node except for the target network node in the distributed network.

For example, started-up network nodes in the distributed network include a network node 1, a network node 2, and a network node 3. If the network node 1, the network node 2, and the network node 3 are all target network nodes, then corresponding to the network node 1, the first network node is the network node 2 and the network node 3; similarly, for the network node 2, the first network node is the network node 1 and the network node 3.

In an embodiment of the present disclosure, according to a predefined rule, it is determined whether to take the centralized network node as the target network node, the distributed network node as the target network node, or each network node in the distributed network as the target network node.

Exemplary, if the predefined rule is that the centralized network node is the target network node, the network node determines whether it is the target network node based on network node attribute information in its own node service information after determining that it has been started up, that is, judges whether the network node is the centralized network node based on the network node attribute information, where the network node attribute information is centralized or distributed, the expression "centralized" indicates that the network node is a centralized network node and the expression "distributed" indicates that the network node is a distributed network node.

For example, after the network node 1 determines that it has been started up, and confirms that it is a centralized network node based on its own network node attribute information, the network node 1 are taken as the target network node.

Further exemplary, if the predefined rule is that the first started-up distributed network node is the target network node, then the network node determines whether it is the target network node based on the network node attribute information in its own node service information and a start order after determining that it has been started up.

For example, after the network node 2 determines that it has been started up, and confirms that it is a distributed network node based on its own network node attribute information, it continues to confirm whether the network node 2 is the first started-up distributed network node, in a case where the network node 2 is the first started-up distributed network node, the network node 2 is taken as the target network node.

It should be noted that taking the first started-up distributed network node as the target network node is only an example, and in the embodiment of the present disclosure, there is no limitation on which started-up distributed network node as the target network node.

Further exemplary, if the predefined rule is that each network node in the distributed network is the target network node, that is, each distributed network node and each centralized network node are the target network node, then after each network node is started, the started-up network node is directly taken as the target network node.

It should be noted that, in a case where each network node in the distributed network is the target network node, the network node does not need to determine whether it is a centralized network node or a distributed network node based on the network node attribute information, that is, the network node does not need to confirm whether it is taken as the target network node based on the network node attribute information.

In an embodiment of the present disclosure, when the centralized network node is taken as the target network node, the centralized network node maintains a topology relationship among all nodes (that is, a topology relationship among all started-up nodes), as well as node service information of all started-up nodes; while the distributed network node only needs to maintain a local node topology relationship (namely a topology relationship between its own network node and a neighboring network node), as well as node service information of its own network node and node service information of the neighboring network node, where the neighboring network node is a network node that is connected to the first network node and has been started up.

Referring to FIG. 3, FIG. 3 is a schematic diagram of a topology relationship of started-up nodes provided by an embodiment of the present disclosure. In this diagram, the started-up nodes include a centralized network node 1, a distributed network node 2, a distributed network node 3, and a distributed network node 4, where the centralized network node 1 is the target network node. In FIG. 3, the centralized network node 1 is connected to the distributed network node 2 and the distributed network node 3 respectively, and the distributed network node 3 is also connected to the distributed network node 2 and the distributed network node 4.

At this time, the centralized network node 1 maintains a topology relationship shown in FIG. 3, as well as maintains node service information of the centralized network node 1 and the distributed network nodes 2, 3, and 4. The distributed network node 2 maintains a topology relationship between the distributed network node 2 and the centralized network node 1, and a topology relationship between the distributed network node 2 and the distributed network node 3, as well as maintains node service information of the centralized network node 1, the distributed network nodes 2 and 3. The distributed network node 3 maintains a topology relationship between the distributed network node 3 and the centralized network node 1, a topology relationship between the distributed network node 3 and the distributed network node 2, and a topology relationship between the distributed network node 3 and the distributed network node 4, as well as maintains node service information of the centralized network node 1 and the distributed network nodes 2, 3, and 4. The distributed network node 4 maintains a topology relationship between the distributed network node 4 and the distributed network node 3, as well as maintains node service information of the distributed network node 4 and the distributed network node 3.

In an embodiment of the present disclosure, when any network node in the distributed network is taken as the target network node, each network node must maintain a topology relationship among all nodes (that is, a topology relationship among all started-up nodes), as well as node service information of all started-up nodes. Therefore, after the distributed network node is started up, it needs to send a node registration message carrying the node service information of the target network node to any started-up network node in the distributed network, so that all started-up network nodes can update their currently maintained network node information.

In an embodiment of the present disclosure, the network node determines that its own node has been started up based on a network strategy.

In an optional implementation, the network strategy is that: it determines that its own node has been started up based on whether the NAR function is started up after at least one specific network element function is started up; that is, if all specific network element functions in the network node except for the NAR function are started up first, and then the NAR function is started up, then it determines that its own node has been started up; or if some specific network element functions in the network node except for the NAR function are started up first, and then the NAR function is started up, then it determines that its own node has been started up.

Exemplary, if the target network node confirms that a first NAR function is started up after at least one first specific network element function is started up, then the target network node determines that its own node has been started up; where both the first specific network element function and the first NAR function are functions of the target network node itself.

Further exemplary, if the first network node confirms that a second NAR function is started up after at least one second specific network element function is started up, then the first network node determines that its own node has been started up; where both the second specific network element function and the second NAR function are functions of the first network node itself.

In another optional implementation, the network strategy is that: it determines that its own node has been started up based on whether at least one specific network element function is started up after the NAR function is started up. That is, if the NAR function is started up first, and then the at least one specific network element function is started up, then it determines that its own node has been started up.

Exemplary, if the target network node confirms that the at least one first specific network element function is started up after the first NAR function is started up, then the target network node determines that its own node has been started up; where both the first specific network element function and the first NAR function are functions of the target network node itself.

Further exemplary, if the first network node confirms that the at least one second specific network element function is started up after the second NAR function is started up, then the first network node determines that its own node has been started up; where both the second specific network element function and the second NAR function are functions of the first network node itself.

The specific network element function includes at least one of a control management function or a data forwarding function. For example, the specific network element function is at least one of an Access and Mobility Management Function (Access and Mobility Management Function, AMF), a Session Management Function (Session Management Function, SMF), a User Plane Function (User Plane Function, UPF), or a Message Forwarding Function.

In an embodiment of the present disclosure, when determining whether its own node has been started up based on whether at least one specific network element function is started up after the NAR function is started up, the network node sends a state change subscription message to a management network element through a target network element supporting a NAR function, receives a network element function registration state update message sent by the management network element through the target network element supporting the NAR function, and determines whether the at least one specific network element function is started up based on the network element function registration state update message.

In an embodiment of the present disclosure, when the network node sends the state change subscription message to the management network element through the target network element, it can adopt an implicit sending manner or an explicit sending manner. But regardless of whether the implicit sending manner or the explicit sending manner is adopted, it should ensure that the management network element can receive the state change subscription message sent by the target network element and accurately return the network element function registration state update message.

Referring to Manner 1 and Manner 2 below, a detailed explanation is provided for implementations of sending the state change subscription message through the implicit manner or the explicit manner respectively to confirm that at least one specific network element function is started up, and further determines that its own node has been started up.

### Manner 1: Implicit manner.

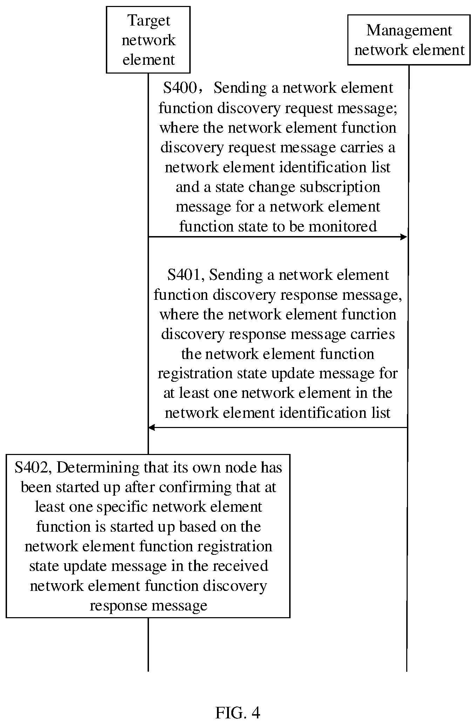

Referring to FIG. 4, FIG. 4 is a flowchart of a first manner for determining that its own node has been started up provided by an embodiment of the present disclosure. It includes the following steps:
step S400, a target network element sends a network element function discovery request message to a management network element; where the network element function discovery request message carries a network element identification list and a state change subscription message for a network element function state to be monitored;
where a network element in the network element identification list is a network element (for example, AMF, SMF, UPF, and so on) that needs to be started up and corresponds to a specific network element function, except for the target network element supporting the NAR function.
step S401, the management network element sends a network element function discovery response message to the target network element in response to the network element function discovery request message, where the network element function discovery response message carries the network element function registration state update message for at least one network element in the network element identification list; and
step S402, the target network element determines that its own node has been started up after confirming that at least one specific network element function is started up based on the network element function registration state update message in the received network element function discovery response message.

In an optional implementation, the network element function registration state update message is not carried in the network element function discovery response message, but is sent separately to the target network element by the management network element after a network element function state of the at least one network element in the network element identification list changes.

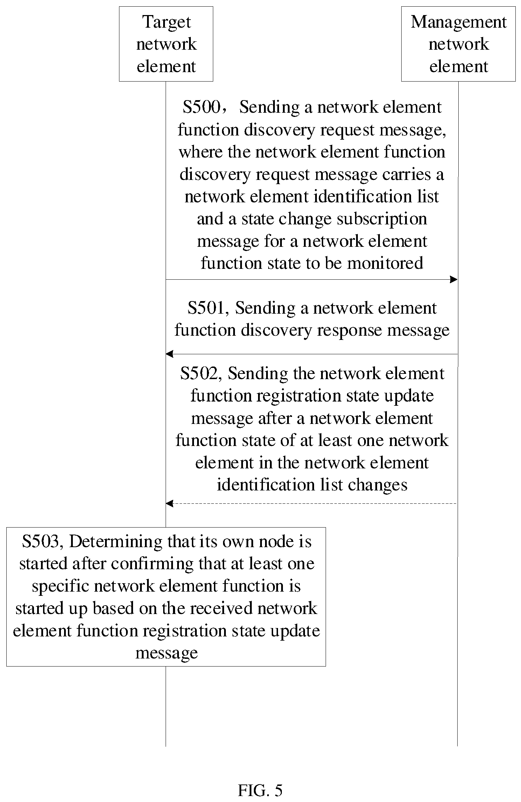

Referring to FIG. 5, FIG. 5 is a flowchart of a second manner for conforming that at least one specific network element function is started up provided by an embodiment of the present disclosure. As shown in FIG. 5, it specifically includes the following steps:
step S500, a target network element sends a network element function discovery request message to a management network element; where the network element function discovery request message carries a network element identification list and a state change subscription message for a network element function state to be monitored;
step S501, the management network element sends a network element function discovery response message to the target network element in response to the network element function discovery request message, where the network element function discovery response message carries the network element function registration state update message for at least one network element in the network element identification list;
step S502, the management network element sends the network element function registration state update message after a network element function state of the at least one network element in the network element identification list changes; and
step S503, the target network element determines that its own node is started after confirming that at least one specific network element function is started up based on the received network element function registration state update message.

It should be noted that both the management network element and the target network element are network elements of the network node itself, and the management network element and the target network element exchange data within the network node. Or, the target network element is a network element of the network node itself, while the management network element is a network element outside the network node. At this time, the management network element exchanges data with the target network element of the network node and a network element supporting the specific network element function in the network node, to obtain a registration state of the network element supporting the specific network element function in the network node, and send the registration state to the target network element.

Exemplary, it takes the network element supporting specific network element function being an AMF network element and the target network element being an NAR network element as an example, the AMF network element sends a network element registration state to the management network element, and the NAR network element sends a network element function discovery request message to the management network element, where the network element function discovery request message carries a network element identification list and a state change subscription message of the AMF network element. At this time, the management network element sends the registration state of the AMF network element to the NAR network element. The AMF network element and the NAR network element are network elements within the same network node, and the management network element is a network element outside the network node.

When the management network element is located outside the network node, a management network element is configured to manage the registration state of the network element supporting the specific network element function in at least one network node, that is, one management network element corresponds to one or more network nodes. For example, the management network element is configured to manage the registration state of the network element supporting the specific network element function in the centralized network node 1, the registration state of the network element supporting the specific network element function in the distributed network node 2, and the registration state of the network element supporting the specific network element function in the distributed network node 3.

In a possible implementation, the management network element is a network element supporting a network element function service management. For example, the management network element is an NRF network element.

Exemplary, the target network node sends a network element function discovery request message to a first NRF network element through a first target network element after determining that the first NAR function is started up, and confirms that at least one first specific network element function is started up based on a received network element function registration state update message sent by the first NRF network element; where the network element function discovery request message carries a network element identification list and a state change subscription message for the network element function state to be monitored

Further exemplary, the first network node sends a network element function discovery request message to a second NRF network element through a second target network element after determining that the second NAR function is started up, and confirms that at least one second specific network element function is started up based on a received network element function registration state update message sent by the second NRF network element; where the network element function discovery request message carries a network element identification list and a state change subscription message for the network element function state to be monitored.

Manner 2: Explicit sending manner.

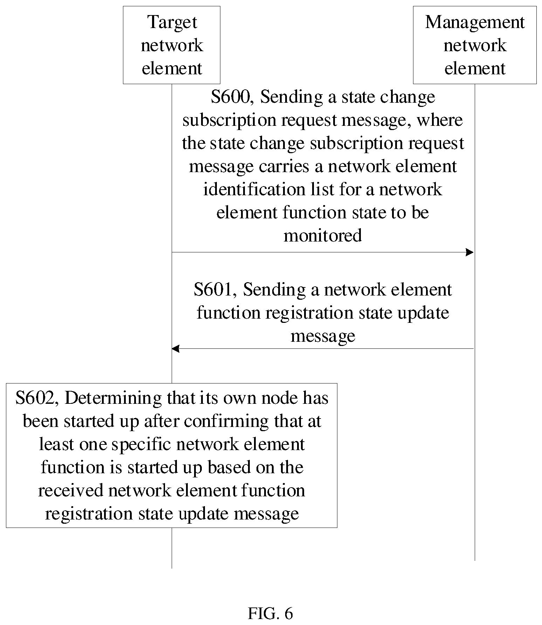

Referring to FIG. 6, FIG. 6 is a flowchart of a third manner for conforming that at least one specific network element function is started up provided by an embodiment of the present disclosure. It includes the following steps:
step S600, a target network element sends a state change subscription request message to a management network element, where the state change subscription request message carries a network element identification list for a network element function state to be monitored;
step S601, the management network element sends a network element function registration state update message to the target network element in response to the state change subscription request message; and
step S602, the target network element determines that its own node has been started up after confirming that at least one specific network element function is started up based on the received network element function registration state update message.

In an optional implementation, the management network element sends one network element function registration state update message to the target network element in response to the state change subscription request message, the network element function registration state update message is used to notify that network element function states of all network elements in the network element identification list have changed; the management network element can also send multiple network element function registration state update messages to the target network element in response to the state change subscription request message, each network element function registration state update message is used to notify a network element function state of at least one network element in the network element identification list has changed.

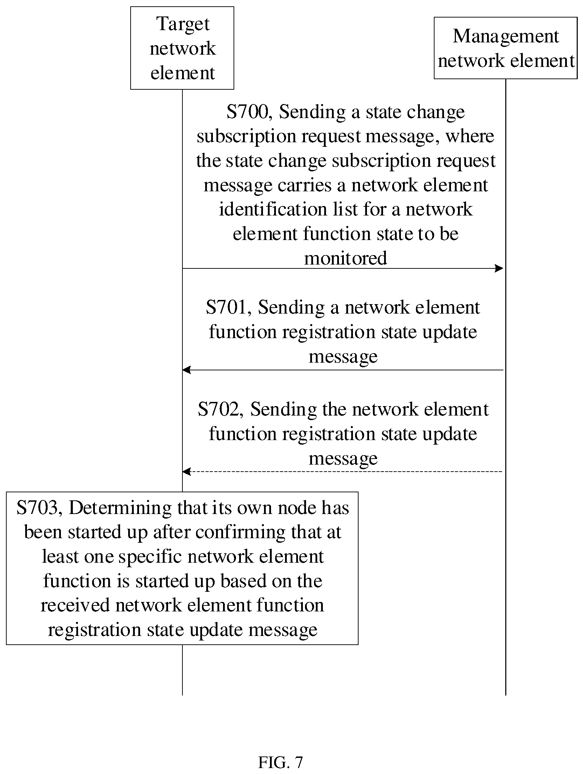

Referring to FIG. 7, FIG. 7 is a flowchart of a fourth manner for conforming that at least one specific network element function is started up provided by an embodiment of the present disclosure. As shown in FIG. 7, it includes the following steps:
step S700, a target network element sends a state change subscription request message to a management network element, where the state change subscription request message carries a network element identification list for a network element function state to be monitored;
step S701, the management network element sends a network element function registration state update message to the target network element;
step S702, the management network element sends the network element function registration state update message to the target network element; and
step S703, the target network element determines that its own node has been started up after confirming that at least one specific network element function is started up based on the received network element function registration state update message.

Exemplary, the target network node sends a state change subscription request message to a first NRF network element through a first target network element after determining that the first NAR function is started up, and confirms that at least one first specific network element function is started up based on a received network element function registration state update message sent by the first NRF network element; where the state change subscription request message carries a network element identification list for the network element function state to be monitored.

Further exemplary, the first network node sends a state change subscription request message to a second NRF network element through a second target network element after determining that the second NAR function is started up, and confirms that at least one second specific network element function is started up based on a received network element function registration state update message sent by the second NRF network element; where the state change subscription request message carries a network element identification list for the network element function state to be monitored.

In the present disclosure, a manner for the network node to determine that its own node has been started up through the NAR function is provided, which achieves automatic monitoring without manual interference.

It is considered that regardless of whether the distributed network node in the distributed network is the target network node or the centralized network node is the target network node, the manner to maintain network node information is roughly the same. However, when the centralized network node is the target network node, compared to any network node in the distributed network being the target network node, the network node information maintained by the network node in the distributed network is relatively fewer, thereby saving resources.

Meanwhile, it is considered that the node state message in the embodiment of the present disclosure involves at least one of a node registration message, a node deregistration message, a node information update message, or a state monitoring response message, and different node state messages correspond to different maintenance methods for network node information.

Therefore, it takes the centralized network node being the target network node and the first network node being the distributed network node as an example, the following embodiments 1-4 will provide a detailed explanation of the maintenance method for network node information involved in the embodiment of the present disclosure.

Embodiment 1: the distributed network node sends a node registration message to the centralized network node.

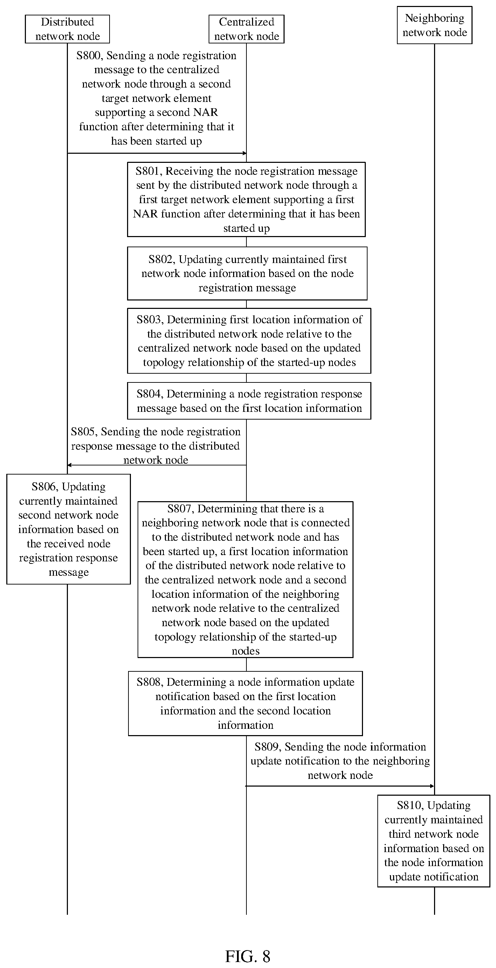

Referring to FIG. 8, FIG. 8 is a flowchart for updating network node information based on a node registration message provided by an embodiment of the present disclosure. It includes the following steps:
step S800, a distributed network node sends a node registration message to a centralized network node through a second target network element supporting a second NAR function after determining that it has been started up.

In an optional implementation, the node registration message carries node service information of the distributed network node.

The node service information includes at least one of network node identification information, network node address information, network node attribute information, network node location information, network node service area information, data network information, or slice information.

In an embodiment of the present disclosure, the node service information of the distributed network node includes address information of the network node. The address information of the network node includes address information of the centralized network node and address information of its own node; For example, it includes a Uniform Resource Locator (Uniform Resource Locator, URL) or an Internet Protocol Address (Internet Protocol Address, IP) of the NAR of the centralized network node, and NAR or IP address of its own node.

Therefore, after determining that it has been started up, the distributed network node sends the node registration message to a corresponding centralized network node based on the address information of the centralized network node in the node service information.

In an optional implementation, the node registration message carries a state change subscription message of a neighboring network node, so that the centralized network node can send a node information update notification to the distributed network node after determining that a state of the neighboring network node connected to the distributed network node has changed. For example, the centralized network node sends a node update notification to the distributed network node after determining that the state of the neighboring network node connected to the distributed network node has changed due to a startup, a fault and so on.

Step S801, the centralized network node receives the node registration message sent by the distributed network node through a first target network element supporting a first NAR function after determining that it has been started up.

Step S802, the centralized network node updates currently maintained first network node information based on the node registration message.

The first network node information includes a topology relationship of started-up nodes and corresponding node service information.

In an optional implementation, the centralized network node determines a target location of the distributed network node in a locally maintained physical topology relationship of nodes based on the network node identification information in the node registration message, and updates the currently maintained topology relationship of the started-up nodes based on the target location, updates the currently maintained node service information based on the node service information of the distributed network node; where the target location represents a connection relationship between the distributed network node and the centralized network node.

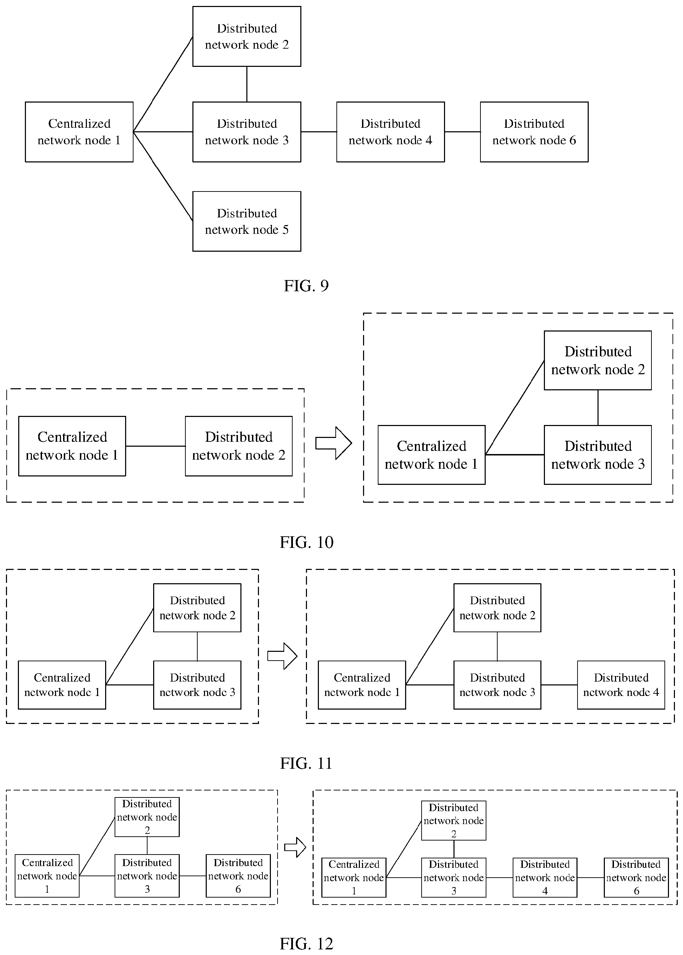

The locally maintained physical topology relationship of the nodes refers to a topology relationship between pre-deployed physical network nodes, there are started-up and/or not started-up network nodes in all network nodes of the topology relationship; a topology relationship of the started-up nodes refers to a topology relationship between the currently started-up network nodes. Referring to FIG. 9, FIG. 9 is a schematic diagram of a locally maintained physical topology relationship of nodes provided by an embodiment of the present disclosure. A topology relationship among a centralized network node 1, a distributed network node 2, a distributed network node 3, a distributed network node 4, a distributed network node 5, and a distributed network node 6 is physically constructed in FIG. 9.

Based on the example in FIG. 9, an example is provided to update currently maintained first network node information: after the centralized network node 1 is started up, the centralized network node 1 determines that the distributed network node 2 is started up, and determines that the distributed network node 2 is connected to the centralized network node 1. Therefore, the updated topology relationship of the started-up nodes is a topology relationship between the centralized network node 1 and the distributed network node 2, and maintains node service information of the centralized network node 1 and the distributed network node 2.

Step S803, the centralized network node determines first location information of the distributed network node relative to the centralized network node based on the updated topology relationship of the started-up nodes.

Step S804, the centralized network node determines a node registration response message based on the first location information.

The first location information is used to represent a direct connection or an indirect connection between the distributed network node and the centralized network node.

In an optional implementation, the node registration response message includes at least one of node service information of the centralized network node, node service information of a neighboring network node that is connected to the distributed network node and has been started up, or a topology relationship of nodes.

In an embodiment of the present disclosure, if the first location information of the distributed network node is different, information carried in the node registration response message is different. In the below, based on the above example in FIG. 9, it provides a detailed explanation for determining the node registration response message through scenarios 11 to 13.

Scenario 11: the distributed network node is directly connected to the centralized network node, and there is no neighboring network node that is connected to the distributed network node and has been started up in the updated topology relationship of the started-up nodes, it determines that the node registration response message carries the node service message of the centralized network node.

Exemplary, after the centralized network node 1 is started up, only any one of the distributed network nodes 2-6 is started up. It only includes one centralized network node and one distributed network node in the updated topology relationship of the started-up nodes. At this time, there are no neighboring network node that is connected to the distributed network node and has been started up except for the centralized network node in the topology relationship of the started-up nodes. Therefore, the node registration response message carrying the node service information of the centralized network node is sent to the distributed network node.

For the distributed network node 5 shown in FIG. 9, regardless of when the distributed network node 5 is started up, in the updated started-up topology relationship, there is no neighboring network node that is connected to the distributed node 5 and has been started up except for the centralized network node 1. At this time, the node registration response message carrying the node service information of the centralized network node 1 is sent to the distributed network node 5.

Scenario 12: the distributed network node is directly connected to the centralized network node, and there is the neighboring network node that is connected to the distributed network node and has been started up in the updated topology relationship of the started-up nodes, it determines that the node registration response message carries the node service message of the centralized network node and determines the node service message of the neighboring network node that is connected to the distributed network node and has been started up.

Exemplary, the topology relationship of the started-up nodes currently maintained by the centralized network node 1 is: a topology relationship between the centralized network node 1 and the distributed network node 2. After the node registration message sent by the distributed network node 3 is received, the currently maintained topology relationship of the started-up nodes is updated as: a topology relationship among the centralized network node 1, the distributed network node 2, and the distributed network node 3. Referring to FIG. 10, FIG. 10 is a schematic diagram for updating a first topology relationship of started-up nodes provided by an embodiment of the present disclosure.

Based on FIG. 10, it is determined that in addition to the centralized network node 1, the distributed network node 3 has the neighboring network node that is connected to the distributed network node 3 and has been started up, that is, the neighboring network node is the distributed network node 2. Therefore, the node registration response message carrying the node service information of the centralized network node 1 and the distributed network node 2 is sent to the distributed network node 3.

Scenario 13: the distributed network node is indirectly connected to the centralized network node.

Exemplary, the topology relationship of the started-up nodes currently maintained by the centralized network node 1 is: a topology relationship among the centralized network node 1, the distributed network node 2 and the distributed network node 3. After the node registration message sent by the distributed network node 4 is received, the currently maintained topology relationship between the started-up node is updated as: a topology relationship among the centralized network node 1, the distributed network node 2, the distributed network node 3 and the distributed network node 4. Referring to FIG. 11, FIG. 11 is a schematic diagram for updating a second topology relationship of started-up nodes provided by an embodiment of the present disclosure.

Based on FIG. 11, it is determined that the distributed network node 4 is indirectly connected to the centralized network node 1 through the distributed network node 3, and the distributed network node 3 is a neighboring network node of the distributed network node 4. Therefore, the node registration response message carrying the node service information of the centralized network node 1 and the distributed network node 3, as well as a topology relationship of the centralized network node 1 being connected to the distributed network node 3, and a topology relationship of the distributed network node 3 being connected to the distributed network node 4 is sent to the distributed network node 4.

Further exemplary, the currently maintained topology relationship of the started-up nodes by the centralized network node 1 is: a topology relationship among the centralized network node 1, the distributed network node 2, the distributed network node 3 and the distributed network node 6. After the node registration message sent by the distributed network node 4 is received, the currently maintained topology relationship of the started-up nodes is updated as: a topology relationship among the centralized network node 1, the distributed network node 2, the distributed network node 3, the distributed network node 4 and the distributed network node 6. Referring to FIG. 12, FIG. 12 is a schematic diagram for updating a third topology relationship of started-up nodes provided by an embodiment of the present disclosure.

Based on FIG. 12, it is determined that the distributed network node 4 is indirectly connected to the centralized network node 1 through the distributed network node 3, and the distributed network node 3 is a neighboring network node of the distributed network node 4. In addition to the distributed network node 3, there is also the distributed network node 6 that is connected to the distributed network node 4 and has been started up as a neighboring network node. Therefore, the node registration response message carrying the node service information of the centralized network node 1, the distributed network node 3 and the distributed network node 6, as well as a topology relationship of the centralized network node 1 being connected to the distributed network node 3, a topology relationship of the distributed network node 3 being connected to the distributed network node 4 and a topology relationship of the distributed network node 4 being connected to the distributed network node 6 is sent to the distributed network node 4.

Step S805, the centralized network node sends the node registration response message to the distributed network node.

Step S806, the distributed network node updates currently maintained second network node information based on the received node registration response message.

Corresponding to the above scenario 11, the distributed network node maintains its topology relationship with the centralized network node, as well as its own node service information and the node service information of the centralized network node. For example, the distributed network node 5 maintains a direct connection with the centralized network node 1, and maintains the node service information of the distributed network node 5 and the node service information of the centralized network node 1.

Corresponding to the above scenario 12, the distributed network node maintains its topology relationship with the centralized network node and the neighboring network node, as well as its own node service information, the node service information of the centralized network node and the node service information of the neighboring network node. For example, the distributed network node 3 maintains a direct connection with the centralized network node 1, a direct connection with the distributed network node 2, and maintains the node service information of the distributed network node 3, the distributed network node 2 and the centralized network node 1.

Corresponding to the above scenario 13, the distributed network node maintains its topology relationship with the centralized network node and the neighboring network node, as well as its own node service information, the node service information of the centralized network node and the node service information of the neighboring network node. Based on FIG. 12, the distributed network node 4 maintains an indirect connection with the centralized network node 1 through the network node 3, a direct connection with the distributed network node 6, and maintains the node service information of the distributed network node 3, the distributed network node 4, the distributed network node 6 and the centralized network node 1.

Step S807, the centralized network node determines that there is a neighboring network node that is connected to the distributed network node and has been started up, a first location information of the distributed network node relative to the centralized network node and a second location information of the neighboring network node relative to the centralized network node based on the updated topology relationship of the started-up nodes.

Step S808, the centralized network node determines a node information update notification based on the first location information and the second location information.

The first location information is used to represent a direct connection or an indirect connection between the distributed network node and the centralized network node. The second location information is used to represent a direct connection or an indirect connection between the neighboring network node and the centralized network node.

In an optional implementation, the node information update notification includes at least one of the node service information of the distributed network node, or the topology relationship of the nodes.

In an embodiment of the present disclosure, the first location information and the second location information directly affect information carried in the node information update notification. In the below, it provides a detailed explanation of determining the node information update notification.

Scenario 21: the distributed network node is directly connected to the centralized network node, and the neighboring network node is directly connected to the centralized network node, then it is determined that the node information update notification carries the node service information of the distributed network node.

Exemplary, the topology relationship of the started-up nodes currently maintained by the centralized network node 1 is: a topology relationship between the centralized network node 1 and the distributed network node 2. After the node registration message sent by the distributed network node 3 is received, the currently maintained topology relationship of the started-up nodes is updated as: a topology relationship among the centralized network node 1, the distributed network node 2, and the distributed network node 3. Reference is made to the schematic diagram for updating the first topology relationship of the started-up nodes as shown in FIG. 10.

Based on FIG. 10, it is determined that in addition to the centralized network node 1, the distributed network node 3 also has a neighboring network node that is connected to the distributed network node 3 and has been started up, and the neighboring network node is the distributed network node 2, the distributed network node 2 is directly connected to the centralized network node 1, and the distributed network node 3 is directly connected to the centralized network node 1. Therefore, the node information update notification carrying the node service information of the distributed network node 3 is sent to the distributed network node 2.

Scenario 22: the distributed network node is indirectly connected to the centralized network node, and the neighboring network node is directly connected to the centralized network node, then it is determined that the node information update notification carries the node service information of the distributed network node and the topology relationship of the nodes.

Exemplary, the topology relationship of the started-up nodes currently maintained by the centralized network node 1 is: a topology relationship among the centralized network node 1, the distributed network node 2 and the distributed network node 3. After the node registration message sent by the distributed network node 4 is received, the currently maintained topology relationship of the started-up nodes is updated as: a topology relationship among the centralized network node 1, the distributed network node 2, the distributed network node 3 and the distributed network node 4. Reference is made to the schematic diagram for updating the second topology relationship of the started-up nodes as shown in FIG. 11.

Based on FIG. 11, it is determined that there is a neighboring network node that is connected to the distributed network node 4 and has been started up. The neighboring network node is the distributed network node 3, the distributed network node 3 is directly connected to the centralized network node 1, and the distributed network node 4 is indirectly connected to the centralized network node 1 through the distributed network node 3. Therefore, the node service information carrying the node service information of the distributed network node 4 and the node information update notification of the topology relationship of the nodes are sent to the distributed network node 3; where the topology relationship of the nodes is that: the centralized network node 1 is connected to the distributed network node 3, and the distributed network node 3 is connected to the distributed network node 4.

Scenario 23: the distributed network node is directly connected to the centralized network node, and the neighboring network node is indirectly connected to the centralized network node, the it is determined that the node information update notification carries the node service information of the distributed network node and the topology relationship of the nodes.

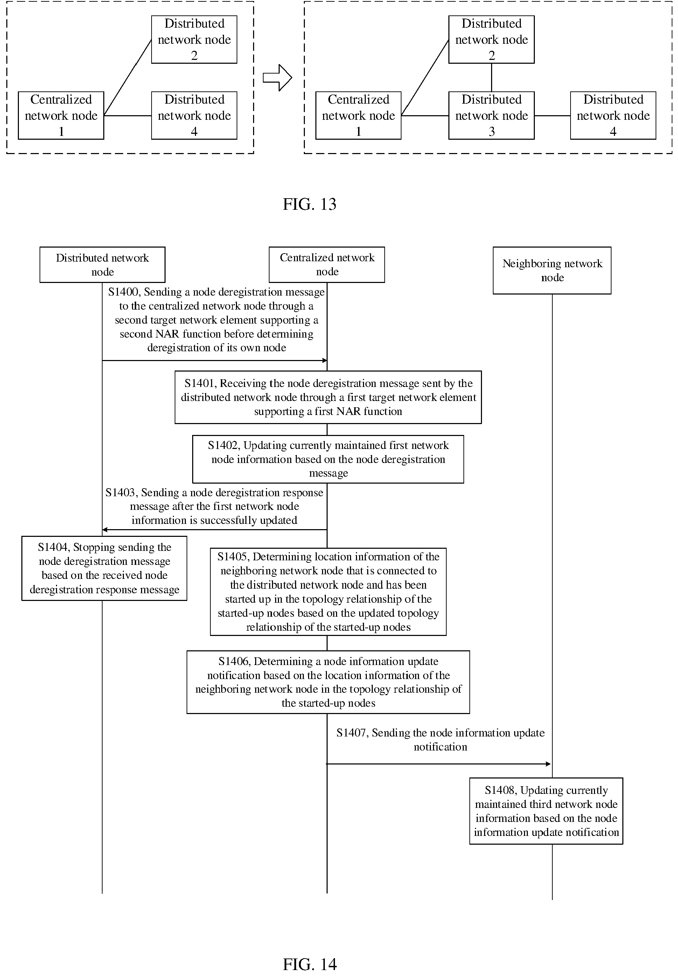

Exemplary, the topology relationship of the started-up nodes currently maintained by the centralized network node 1 is: a topology relationship among the centralized network node 1, the distributed network node 2 and the distributed network node 4. After the node registration message sent by the distributed network node 3 is received, the currently maintained topology relationship of the started-up nodes is updated as: a topology relationship among the centralized network node 1, the distributed network node 2, the distributed network node 3 and the distributed network node 4. Referring to FIG. 13, FIG. 13 is a schematic diagram for updating a fourth topology relationship of started-up nodes provided by an embodiment of the present disclosure.

Based on FIG. 13, it is determined that there is a neighboring network node that is connected to the distributed network node 3 and has been started up, the neighboring network node includes the distributed network node 2 and the distributed network node 4, where the distributed network node 3 is directly connected to the centralized network node 1, and the distributed network node 4 is indirectly connected to the centralized network node 1 through the distributed network node 3. Therefore, the node service information carrying the node service information of the distributed network node 3 and the node information update notification of the topology relationship of the nodes is sent to the distributed network node 4; where the topology relationship of the nodes is that: the centralized network node 1 is connected to the distributed network node 3, and the distributed network node 3 is connected to the distributed network node 4.

Scenario 24: the distributed network node is indirectly connected to the centralized network node, and the neighboring network node is indirectly connected to the centralized network node, then it is determined that the node information update notification carries the node service information of the distributed network node and the topology relationship of the nodes.

Exemplary, the topology relationship of the started-up nodes currently maintained by the centralized network node is: a topology relationship among the centralized network node 1, the distributed network node 2, the distributed network node 3 and the distributed network node 6. After the node registration message sent by the distributed network node 4 is received, the currently maintained topology relationship of the started-up nodes is updated as: a topology relationship among the centralized network node 1, the distributed network node 2, the distributed network node 3, the distributed network node 4 and the distributed network node 6. Reference is made to a schematic diagram for updating a fifth topology relationship of started-up nodes as shown in FIG. 12.

Based on FIG. 12, it is determined that there is a neighboring network node that is connected to the distributed network node 4 and has been started up, the neighboring network node includes the distributed network node 3 and the distributed network node 6, the distributed network node 4 is indirectly connected to the centralized network node 1 through the distributed network node 3, and the distributed network node 6 is indirectly connected to the centralized network node 1 through the distributed network node 3 and the distributed network node 4. Therefore, the node service information carrying the node service information of the distributed network node 4 and the node information update notification of the topology relationship of the nodes is sent to the distributed network node 6; where the topology relationship of the nodes is that: the distributed network node 3 is connected to the distributed network node 4, and the distributed network node 4 is connected to the distributed network node 6.

It should be noted that when there is no neighboring network node that is connected to the distributed network node and has been started up, there is no need to determine and send the node information update notification.

Step S809, the centralized network node sends the node information update notification to the neighboring network node.

Step S810, the neighboring network node updates currently maintained third network node information based on the node information update notification.

The third network node information includes a topology relationship between the neighboring node and its adjacent network node, as well as corresponding node service information.

Corresponding to the above scenario 21, the distributed network node 2 maintains a connection relationship with the centralized network node 1, a connection relationship with the distributed network node 3, and the node service information of the centralized network node 1, the distributed network node 2, and the distributed network node 3.

Corresponding to the above scenario 22, the distributed network node 3 maintains a connection relationship with the centralized network node 1, a connection relationship with the distributed network node 2, and a connection relationship with the distributed network node 4, and maintains the node service information of the centralized network node 1, the distributed network node 2, the distributed network node 3, and the distributed network node 4.

Corresponding to the above scenario 23, the distributed network node 4 maintains a connection relationship with the distributed network node 3, and maintains the node service information of the distributed network node 3 and the distributed network node 4.

Corresponding to the above scenario 24, the distributed network node 6 maintains a connection relationship with the distributed network node 4, and maintains the node service information of the distributed network node 4 and the distributed network node 6.

It should be noted that in the embodiment of the present disclosure, there is no executing order of sending the node registration response message to the distributed network node and sending the node information update notification to the neighboring network node. They can be executed simultaneously, or the implementation of steps S807 to S810 can be executed first, or the implementation of steps S803 to S806 can also be executed first, which will not be repeated here.

In the present disclosure, after network nodes in the distributed network are started up, the network nodes discover each other and update the network node information they maintain, so that the network nodes can perform data communication between the network nodes based on the network node information, which achieves a plug and play mechanism between the network nodes, avoids the problem of the network nodes being unable to cooperate normally due to the network nodes splitting, and reduces the number of signaling and hides internal detail information of the nodes.

Embodiment 2: the distributed network node sends a node deregistration message to the centralized network node.

Referring to FIG. 14, FIG. 14 is a flowchart for updating network node information based on a node deregistration message provided by an embodiment of the present disclosure. It includes the following steps:
step S1400, the distributed network node sends a node deregistration message to the centralized network node through a second target network element supporting a second NAR function before determining deregistration of its own node.

In an embodiment of the present disclosure, the distributed network node actively sends the node registration message to the centralized network node before going offline; namely actively sends the node registration message before deregistration.

In an optional implementation, the distributed network node determines that it needs deregistration based on a local policy or a received registration instruction.

The local strategy is that: the second target network element determines that it needs deregistration after determining deregistration of at least one second specific network element function.

Exemplary, if the second target network element of the distributed network node determines deregistration of the at least one second specific network element function through the second NAR function, the second target network element confirms deregistration of its own node.

In an embodiment of the present disclosure, the second target network element determines whether the at least one second specific network element function is deregistered based on a network element function deregistration state update message sent by a second management network element.

In order to accurately obtain the network element function deregistration state update message sent by the second management network element, the second target network element sends a state change subscription message to the second management network element. When sending the state change subscription message, the second target network element can adopt an implicit sending manner or an explicit sending manner. But regardless of whether the implicit sending manner or the explicit sending manner is adopted, it should ensure that the second management network element can receive the state change subscription message sent by the second target network element.

In the below, the explicit sending manner is taken as an example to provide a detailed explanation for implementations of confirming deregistration of the at least one second specific network element function, and further determining deregistration of its own node.

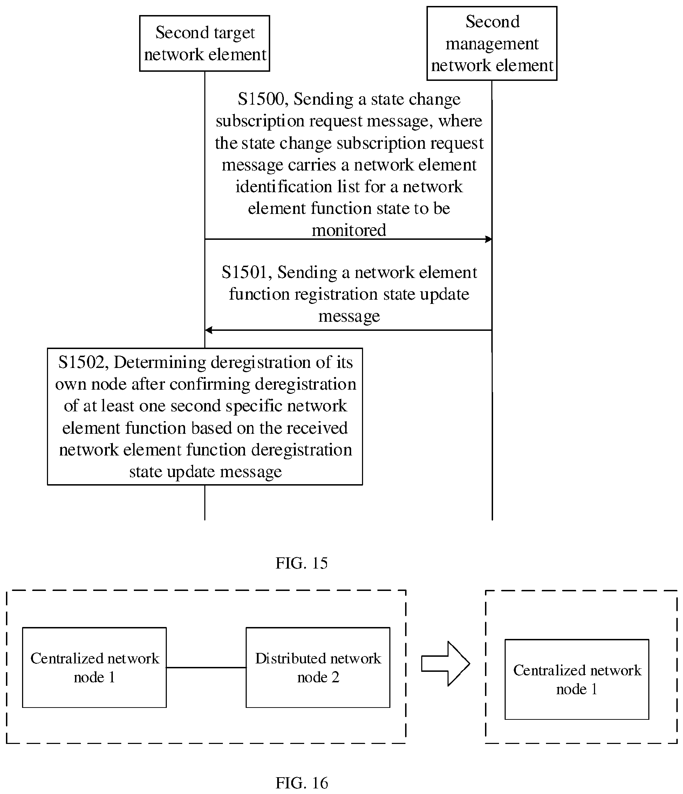

Referring to FIG. 15, FIG. 15 is a flowchart of a manner for determining deregistration of its own node provided by an embodiment of the present disclosure. It includes the following steps:
step S1500, the second target network element sends a state change subscription request message to the second management network element, where the state change subscription request message carries a network element identification list for a network element function state to be monitored;
step S1501, the second management network element sends a network element function registration state update message to the second target network element in response to the state change subscription request message; and
step S1502, the second target network element determines deregistration of its own node after confirming deregistration of at least one second specific network element function based on the received network element function deregistration state update message.

It should be noted that both the second target network element and the second management network element are network elements of the distributed network node itself; or the second target network element is a network element of the distributed network node itself, while the second management network element is the network element outside the distributed network node. When the second management network element is located outside the distributed network node, the first management network element and the second management network element can be the same network element.

In one possible implementation, the second management network element is a network element supporting network element function service management. For example, the second management network element is a second NRF network element.

Exemplary, the distributed network node sends the state change subscription request message to the second NRF network element through the second target network element supporting the second NAR function, and confirms deregistration of the at least one second specific network element function based on the received network element function deregistration state update message sent by the second NRF network element; where the state change subscription request message carries the network element identification list for the network element function state to be monitored.

In an embodiment of the present disclosure, the implementation of startup of the network node is similar to that of deregistration of the network node, for specific details, please refer to the implementation of the startup of the network node, which will not be repeated here.

In the present disclosure, a manner for the network node to determine deregistration of its own node through the NAR function is provided, which achieves automatic monitoring without manual interference.

Step S1401, the centralized network node receives the node deregistration message sent by the distributed network node through a first target network element supporting a first NAR function.

Step S1402, the centralized network node updates currently maintained first network node information based on the node deregistration message.

In an optional implementation, when the target network node updates the currently maintained first network node information based on the node deregistration message, it first determines third location information of the distributed network node according to the currently maintained first network node information, determines a neighboring network node that is connected to the distributed network node and has been started up as well as fourth location information of the neighboring network node; then, it determines a corresponding update strategy based on the third location information and the fourth location information, and adopts the determined update strategy to update the currently maintained first network node information.

That is to say, the manner of updating the currently maintained first network node information is related to the position of the distributed network node corresponding to the node deregistration message within the currently maintained topology relationship of the started-up nodes, the existence of the neighboring network node, and the position of the neighboring network node within the currently maintained topology relationship of the started-up nodes.

In the below, through scenarios 31 to 34, it provides an explanation for updating the currently maintained topology relationship of the started-up nodes based on the node deregistration message.

Scenario 31: if the distributed network node is directly connected to the centralized network node and there is no neighboring network node, then a connection relationship between the distributed network node and the centralized network node is directly disconnected.

Exemplary, the topology relationship of the started-up nodes currently maintained by the centralized network node 1 is: a topology relationship between the centralized network node 1 and the distributed network node 2. After the node registration message sent by the distributed network node 2 is received, the currently maintained topology relationship of the started-up nodes is updated as: the centralized network node 1. Referring to FIG. 16, FIG. 16 is a schematic diagram for updating a fifth topology relationship of started-up nodes provided by an embodiment of the present disclosure.

Based on FIG. 16, it is determined that the distributed network node 2 is directly connected to the centralized network node 1, and there is no neighboring network node that is connected to the distributed network node 2 and has been started up. Therefore, a connection relationship between the distributed network node 2 and the centralized network node 1 is directly disconnected.

Scenario 32: if the distributed network node is directly connected to the centralized network node and there is a neighboring network node that is directly connected to the centralized network node, then a connection relationship between the distributed network node and the centralized network node is disconnected, and a connection between the distributed network node and the neighboring network node is disconnected, while a connection relationship between the neighboring network node and the centralized network node is maintained.

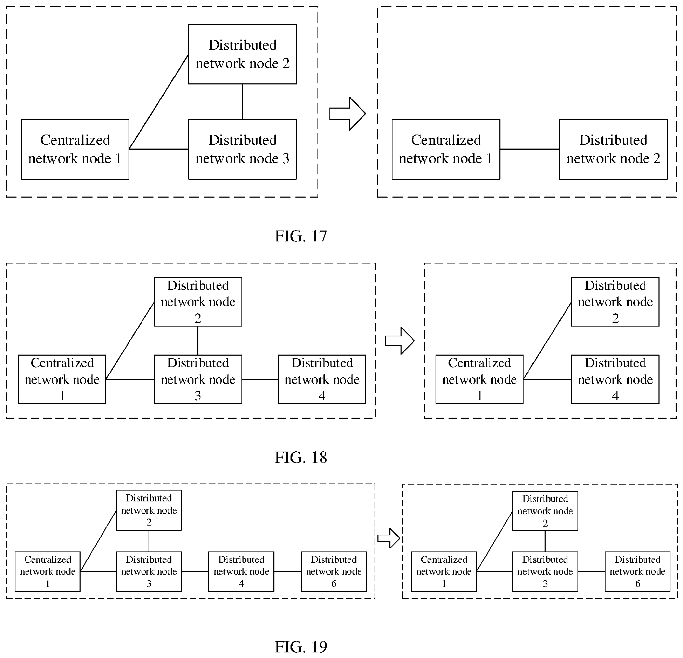

Exemplary, the topology relationship of the started-up nodes currently maintained by the centralized network node 1 is: a topology relationship among the centralized network node 1, the distributed network node 2 and the distributed network node 3. After the node registration message sent by the distributed network node 3 is received, the currently maintained topology relationship of the started-up nodes is updated as: a topology relationship between the centralized network node 1 and the distributed network node 2. Referring to FIG. 17, FIG. 17 is a schematic diagram for updating a sixth topology relationship of started-up nodes provided by an embodiment of the present disclosure.

Based on FIG. 17, it is determined that the distributed network node 3 is directly connected to the centralized network node 1, and the distributed network node 2, which is connected to the distributed network node 3 and has been started, is directly connected to the centralized network node 1. Therefore, connection relationships of the distributed network node 3 with the distributed network node 2 and the centralized network node 1 are disconnected, while a connection relationship between the distributed network node 2 and the centralized network node 1 is maintained.

Scenario 33: if the distributed network node is directly connected to the centralized network node and there is a neighboring network node that is indirectly connected to the centralized network node through the distributed network node, then a connection relationship between the distributed network node and the centralized network node is disconnected, and a connection relationship between the distributed network node and the neighboring network node is disconnected, while the neighboring network node is connected to the centralized network node.

Exemplary, the topology relationship of the started-up nodes currently maintained by the centralized network node 1 is: a topology relationship among the centralized network node 1, the distributed network node 2, the distributed network node 3 and the distributed network node 4. After the node registration message sent by the distributed network node 3 is received, the currently maintained topology relationship of the started-up nodes is updated as: a topology relationship among the centralized network node 1, the distributed network node 2 and the distributed network node 4. Referring to FIG. 18, FIG. 18 is a schematic diagram for updating a seventh topology relationship of started-up nodes provided by an embodiment of the present disclosure.

Based on FIG 18, it is determined that the distributed network node 3 is directly connected to the centralized network node 1, the distributed network node 2 is directly connected to the distributed network node 3, the distributed network node 2 is directly connected to the centralized network node 1, and the distributed network node 4 is indirectly connected to the centralized network node 1 through the distributed network node 3. Therefore, connection relationships of the distributed network node 3 with the centralized network nodes 1, the distributed network node 2 and the distributed network node 4 are disconnected, while a connection relationship between the distributed network node 2 and the centralized network node 1 is maintained, and the centralized network node 1 is connected to the distributed network node 4.

Scenario 34: if the distributed network node is indirectly connected to the centralized network node through a first neighboring network node, and there is a second neighboring network node that is indirectly connected to the first neighboring network node through the distributed network node, then connection relationships of the distributed network node with the first neighboring network node and the second neighboring network node are disconnected, and the first neighboring network node is connected to the second neighboring network node, while a connection relationship between the first neighboring network node and the centralized network node is maintained.

Exemplary, the topology relationship of the started-up nodes currently maintained by the centralized network node 1 is: a topology relationship among the centralized network node 1, the distributed network node 2, the distributed network node 3, the distributed network node 4 and the distributed network node 6. After the node registration message sent by the distributed network node 4 is received, the currently maintained topology relationship of the started-up nodes is updated as: a topology relationship among the centralized network node 1, the distributed network node 2, the distributed network node 3 and the distributed network node 6. Referring to FIG. 19, FIG. 19 is a schematic diagram for updating a seventh topology relationship of started-up nodes provided by an embodiment of the present disclosure.

Based on FIG. 19, it is determined that distributed network node 4 is indirectly connected to the centralized network node 1 through the distributed network node 3, the distributed network node 6 is indirectly connected to the distributed network node 3 through the distributed network node 4, and the distributed network node 4 is directly connected to distributed network node 3 and the distributed network node 6. Therefore, connection relationships of the distributed network node 4 with the distributed network node 3 and the distributed network node 6 are disconnected, and the distributed network node 3 is connected to the distributed network node 6.

Step S1403, the centralized network node sends a node deregistration response message to the distributed network node after the first network node information is successfully updated.

Step S1404, the distributed network node stops sending the node deregistration message to the centralized network node based on the received node deregistration response message.

Step S1405, the centralized network node determines location information of the neighboring network node that is connected to the distributed network node and has been started up in the topology relationship of the started-up nodes based on the updated topology relationship of the started-up nodes.

Step S1406, the centralized network node determines a node information update notification based on the location information of the neighboring network node in the topology relationship of the started-up nodes.

The node information update notification includes at least one of the following: a node deregistration message of the distributed network node connected to the neighboring network node, node service information for the centralized network node, or the topology relationship of the nodes.

It should be noted that when there is no neighboring network node that is connected to the distributed network node and has been started up, there is no need to determine and send the node information update notification.

Step S1407, the centralized network node sends the node information update notification to the neighboring network node.

Step S1408, the neighboring network node updates currently maintained third network node information based on the node information update notification.

Taking FIG. 18 as an example for explanation, when the neighboring network node of the distributed network node 3 is the distributed network node 2, the distributed network node 2 disconnects from the distributed network node 3 after receiving the node deregistration message from the distributed network node 3; when the neighboring network node of the distributed network node 3 is the distributed network node 4, after receiving the node deregistration message from the distributed network node 3, the distributed network node 4 disconnects from the distributed network node 3, disconnects the connection between the distributed network node 3 and the centralized network node 1, and generates a connection relationship with the centralized network node 1 when detecting that the currently maintained connection relationship is empty, to update the topology relationship.

It should be noted that in the embodiment of the present disclosure, the manner of determining the node information update communication sent to the neighboring network node and the manner of updating the third network node information based on the node information update notification by the neighboring network node are similar to those in the embodiment 1, and will not be repeated here; there is no executing order of sending the node registration response messages to the distributed network node and sending the node information update notification to the neighboring network node, which will not be repeated here.

In the present disclosure, after the network node in the distributed network is deregistered, each network node immediately discovers and updates the network node information maintained by itself, so that the network node can perform data communication between the network nodes based on the network node information, avoiding the problem of the network nodes being unable to cooperate normally due to registration of the network node.

Embodiment 3: the distributed network node sends a node information update message to the centralized network node.

In an embodiment of the present disclosure, the distributed network node updates and maintains the second network node information through its own second target network element supporting the second NAR function, where the second network node information includes a topology relationship between the distributed network node and the neighboring network node, node service information of the distributed network node itself and node service information of the neighboring network node.

In an optional implementation, after determining that the network node information updated and maintained by itself has changed, the distributed network node sends the node information update message to the centralized network node through the second target network element supporting the second NAR function, so that the centralized network node updates the currently maintained first network node information based on the node information update message.

The changes of the network node information include a change of the node service information.

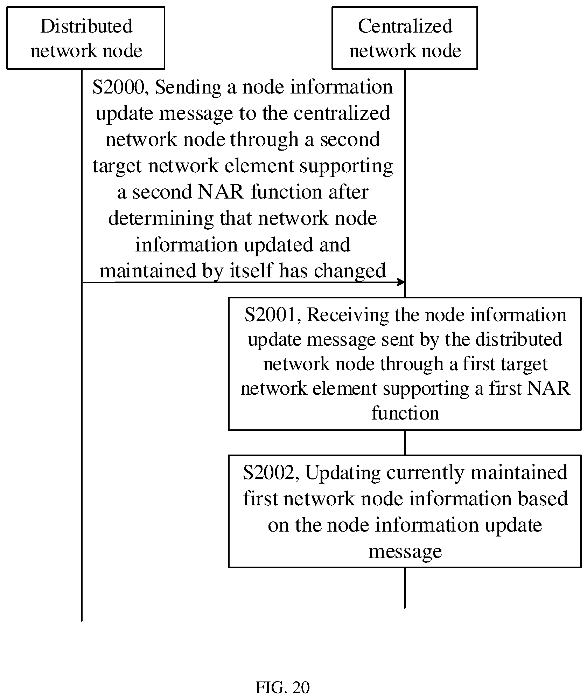

Referring to FIG. 20, FIG. 20 is a flowchart for updating network node information based on a node information update message provided by an embodiment of the present disclosure. It includes the following steps:
Step S2000, the distributed network node sends a node information update message to the centralized network node through a second target network element supporting a second NAR function after determining that network node information updated and maintained by itself has changed;
step S2001, the centralized network node receives the node information update message sent by the distributed network node through a first target network element supporting a first NAR function.
step S2002, the centralized network node updates currently maintained first network node information based on the node information update message.

It should be noted that after updating the first network node information, the centralized network node also sends a node information update notification to a neighboring network node that is connected to the distributed network node and has been started up, so that the neighboring network node updates the currently maintained third network node information based on the node information update notification. For specific details, please refer to the descriptions in Embodiment 1 and Embodiment 2 above, which will not be repeated here.

Embodiment 4: the distributed network node sends a state monitoring response message to the centralized network node.

Considering the sudden failure or offline of the distributed network node, the distributed network node is unable to timely send the node deregistration message to the centralized network node, resulting in that the centralized network node is unable to determine whether the distributed network node is offline, and the problem of abnormal cooperation between existing network nodes.

An embodiment of the present disclosure provides a keep alive mechanism, namely that the centralized network node periodically sends a state monitoring message to a started-up distributed network node and receives a state monitoring response message sent by the distributed network node, to update the currently maintained first network node information after determining that the distributed network node is offline based on state monitoring response message.

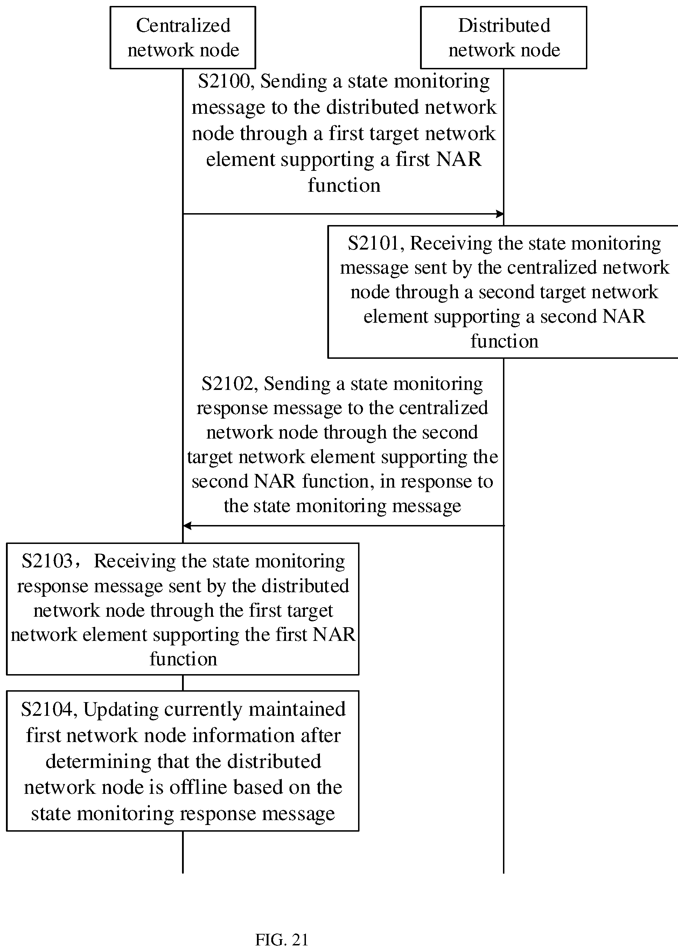

Referring to FIG. 21, FIG. 21 is a flowchart for updating network node information based on a state monitoring response message provided by an embodiment of the present disclosure. It includes the following steps:
step S2100, the centralized network node sends a state monitoring message to the distributed network node through a first target network element supporting a first NAR function;
step S2101, the distributed network node receives the state monitoring message sent by the centralized network node through a second target network element supporting a second NAR function;
step S2102, the distributed network node sends a state monitoring response message to the centralized network node through the second target network element supporting the second NAR function, in response to the state monitoring message;
step S2103, the centralized network node receives the state monitoring response message sent by the distributed network node through the first target network element supporting the first NAR function; and
step S2104, the centralized network node updates currently maintained first network node information after determining that the distributed network node is offline based on the state monitoring response message.

It should be noted that after updating the first network node information, the centralized network node also sends a node information update notification to a neighboring network node that is connected to the offline distributed network node and has been started up, so that the neighboring network node updates the currently maintained third network node information based on the node information update notification. For specific details, please refer to the descriptions in Embodiment 1 and Embodiment 2 above, which will not be repeated here.

In the below, a brief explanation is provided for the manner of updating and maintaining the network node information when any network node in the distributed network is the target network node.

Step 1: A newly started-up network node determines its own network node information through its own target network element supporting a NAR function, that is, a topology relationship of currently started-up network nodes and corresponding node service information.

Step 2: The newly started-up network node automatically sends a node registration message to a NAR of all physical neighboring nodes through the its own target network element supporting the NAR function, where the registration message carries the node service information of the network node.

In an optional implementation, each network node maintains address information of a physical neighboring node; or determines the address information of the physical neighboring node through a broadcast/multicast message. For example, the address information of the physical neighboring node is a URL or IP address of the NAR of the physical neighboring node; where the physical neighboring node includes a centralized network node and a distributed network node.

In an optional implementation, the node registration message can be sent for multiple times at a certain time interval based on a network strategy.

Step 3: after receiving, through its own target network element supporting the NAR function, the node registration message sent by the newly started-up network node, a certain network node updates network node information maintained by itself, that is, a topology relationship of currently started-up network nodes and corresponding node service information.

Step 4: a certain network node sends a node registration response message to the newly started-up network node, where the message carries the node service information of the certain network node.

Step 5: after receiving the node registration response message sent by the certain network node, the newly started-up network node updates network node information maintained by itself.

In an optional implementation, nodes of all network nodes in the distributed network maintain a state between the nodes through the keep alive mechanism.

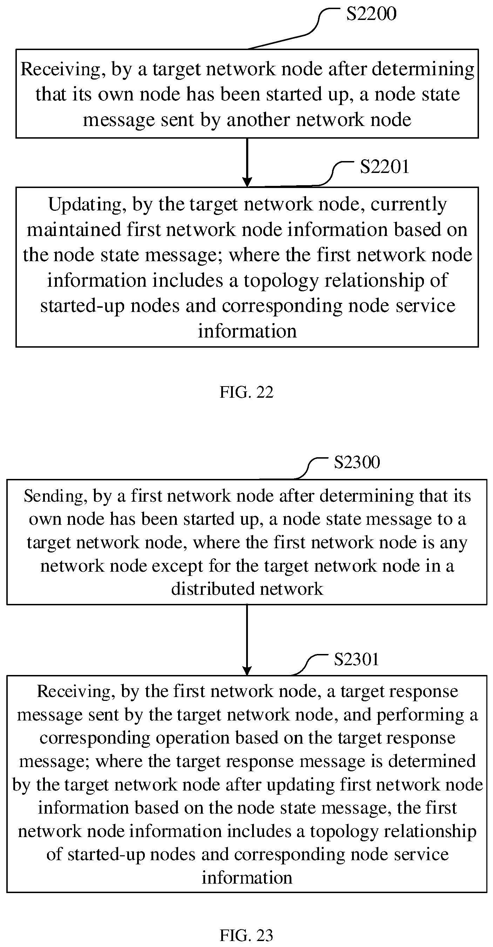

Referring to FIG. 22, FIG. 22 is a schematic diagram of a maintenance method for network node information provided by an embodiment of the present disclosure. It applies to a target network node side, and includes the following steps:
step S2200, receiving, by a target network node after determining that its own node has been started up, a node state message sent by another network node; and
step S2201, updating, by the target network node, currently maintained first network node information based on the node state message; where the first network node information includes a topology relationship of started-up nodes and corresponding node service information.

In an optional implementation, the target network node determines that its own node has been started up by the following manner:
if the target network node confirms that a first NAR function is started up after at least one first specific network element function is started up, then determining that its own node has been started up; where, the first specific network element function includes at least one of a control management function or a data forwarding function; or
if the target network node confirms that the at least one first specific network element function is started up after the first NAR function is started up, then determining that its own node has been started up.

In an optional implementation, the confirming, by the target network node, that the at least one first specific network element function is started up after the first NAR function is started up, includes:
sending, by the target network node, a network element function discovery request message to a first management network element after determining that the first NAR function is started up, and confirming that the at least one first specific network element function is started up based on a received network element function registration state update message sent by the first management network element; where the first management network element supports network element function service management, the network element function discovery request message carries a network element identification list and a state change subscription message for a network element function state to be monitored; or
sending, by the target network node, a state change subscription request message to a first management network element after determining that the first NAR function is started up, and confirming that the at least one first specific network element function is started up based on a received network element function registration state update message sent by the first management network element; where the state change subscription request message carries the network element identification list for the network element function state to be monitored.

In an optional implementation, the receiving, by the target network node after determining that its own node has been started up, the node state message sent by the another network node, includes:
receiving, by the target network node after determining that its own node has been started up, the node state message sent by the another network node through a first target network element supporting a first NAR function;
where the node state message includes at least one of a node registration message, a node deregistration message, a node information update message, or a state monitoring response message.

In an optional implementation, the node registration message carries node service information of the another network node; the node registration message is sent by a second target network element supporting a second NAR function after the another network node determines that its own node has been started up;
where the node service information includes at least one of network node identification information, network node address information, network node attribute information, network node location information, network node service area information, data network information, or slice information.

In an optional implementation, the node state message includes the node registration message, and after the updating, by the target network node, the currently maintained first network node information based on the node state message, the method further includes:
determining, by the target network node, first location information of the another network node relative to the target network node based on the updated topology relationship of the started-up nodes; and
determining, by the target network node, a node registration response message based on the first location information, and sending the node registration response message to the another network node; where, the node registration response message includes at least one of node service information of the target network node, node service information of a neighboring network node that is connected to the another network node and has been started up, or a topology relationship of nodes.

In an optional implementation, the node state message includes the node registration message, and after the updating, by the target network node, the currently maintained first network node information based on the node state message, the method further includes:
determining, by the target network node, a neighboring network node that is connected to the another network node and has been started up, and first location information and second location information of the another network node and the neighboring network node respective relative to the target network node based on the updated topology relationship of the started-up nodes; and
determining, by the target network node, a node information update notification based on the first location information and the second location information, and sending the node information update notification to the neighboring network node;
where, the node information update notification includes at least one of node service information of the another network node, or a topology relationship of nodes.

In an optional implementation, the node deregistration message is sent by a second management network element supporting a second NAR function before the another network node determines deregistration of its own node based on a local policy or a received deregistration instruction.

In an optional implementation, the node state message includes the node deregistration message, and the updating, by the target network node, the currently maintained first network node information based on the node state message, includes:
determining, by the target network node, third location information of the another network node and fourth location information of a neighboring network node that is connected to the another network node and has been started up, based on the currently maintained first network node information; and
determining, by the target network node, a corresponding update strategy based on the third location information and the fourth location information, and updating the currently maintained first network node information by adopting the determined update strategy.

In an optional implementation, the determining, by the target network node, the corresponding update strategy based on the third location information and the fourth location information, includes:
if it is determined that the another network node is directly connected to the target network node, and the neighboring network node is directly connected to the target network node, then disconnecting a connection between the another network node and the target network node, and a connection between the another network node and the neighboring network node;
if it is determined that the another network node is directly connected to the target network node, and the neighboring network node is indirectly connected to the target network node through the another network node, then connecting the neighboring network node to the target network node after disconnecting the connection between the another network node and the target network node, and the connection between the another network node and the neighboring network node; and
if it is determined that the another network node is indirectly connected to the target network node, and the neighboring network node includes a first network node located between the target network node and the another network node and a second network node that is indirectly connected to the first network node via the another network node, then connecting the first network node to the second network node after disconnecting a connection between the another network node and the first network node, and a connection between the another network node and the second network node.

In an optional implementation, the node information update message is sent by a second management network element supporting a second NAR function after the another network node determines that node information it maintains has been changed; where a change of the node information include a change of the node service information.

In an optional implementation, the state monitoring response message is sent by the another network node through a second management network element supporting a second NAR function after receiving a state monitoring request message periodically sent by the target network node.

In an optional implementation, the target network node is a centralized network node and/or a distributed network node in a distributed network.

In an optional implementation, each network node in the distributed network judges whether it is a centralized network node by using network node attribute information in the corresponding node service information.

In an optional implementation, if the target network node is a distributed network node, after determining, by the target network node, that it has been started up through the first target network element, the method further includes:
sending, by the target network node, a node registration message carrying node service information of the target network node to any started-up network node in the distributed network.

Referring to FIG. 23, FIG. 23 is a schematic diagram of another maintenance method for network node information provided by an embodiment of the present disclosure. It applies to a first network node side, and includes the following steps:
step S2300, sending, by a first network node after determining that its own node has been started up, a node state message to a target network node, where the first network node is any network node except for the target network node in a distributed network; and
step S2301, receiving, by the first network node, a target response message sent by the target network node, and performing a corresponding operation based on the target response message; where the target response message is determined by the target network node after updating first network node information based on the node state message, the first network node information includes a topology relationship of started-up nodes and corresponding node service information.

In an optional implementation, the confirming, by the first network node, that the at least one second specific network element function is started up after the second NAR function is started up, includes:
sending, by the first network node, a network element function discovery request message to a second management network element after determining that the second NAR function is started up, and confirming that the at least one second specific network element function is started up based on a received network element function registration state update message sent by the second management network element; where the network element function discovery request message carries a network element identification list and a state change subscription message for a network element function state to be monitored; or
sending, by the first network node, a state change subscription request message to a second management network element after determining that the second NAR function is started up, and confirming that the at least one second specific network element function is started up based on a received network element function registration state update message sent by the second management network element;
where the state change subscription request message carries the network element identification list for the network element function state to be monitored.

In an optional implementation, the sending, by the first network node after determining that its own node has been started up, the node state message to the target network node, includes:
sending, by the first network node after determining that its own node has been started up, the node state message to the target network node through a second target network element supporting a second NAR function;
where the node state message includes at least one of a node registration message, a node deregistration message, a node information update message, or a state monitoring response message.

In an optional implementation, the node registration message carries node service information of the first network node;
where the node service information includes at least one of network node identification information, network node address information, network node attribute information, network node location information, network node service area information, data network information, or slice information.

In an optional implementation, the node deregistration message is determined by the first network node based on a local policy or a received deregistration instruction.

In an optional implementation, the node information update message is determined by the first network node after determining that node information it maintains has been changed; where a change of the node information include a change of the node service information.

In an optional implementation, the state monitoring response message is determined by the first network node after receiving a state monitoring request message periodically sent by the target network node.

In an optional implementation, the receiving, by the first network node, the target response message sent by the target network node, and performing the corresponding operation based on the target response message, includes:
receiving, by the first network node, the target response message sent by the target network node; where the target response message includes a node registration response message carrying node service information of the target network node, node service information of a neighboring network node adjacent to the first network node, and the topology relationship of nodes; and
updating, by the first network node, currently maintained second network node information based on the target response message; where the second network node information includes a topology relationship with an adjacent node that has been started up and corresponding node service information.

Based on the same inventive concept as the above-mentioned method embodiments of the present disclosure, an embodiment in the present disclosure also provides a network device. The principle of problem solving by the network device is similar to a maintenance method for the network node information implemented on the above target network node side. Therefore, the implementation of the network device can refer to the implementation of the maintenance method for the network node information corresponding to the above target network node side, and the repetition will not be repeated here.

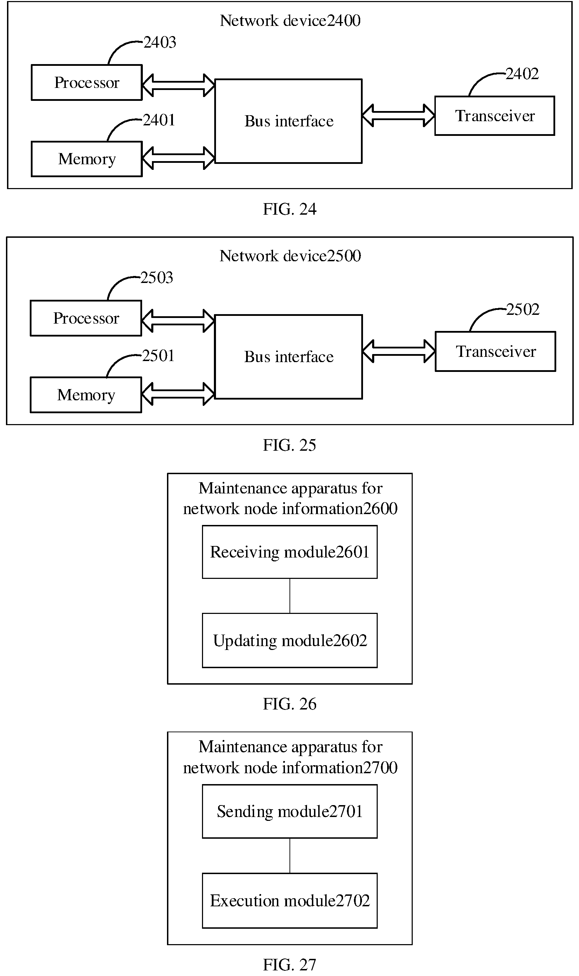

Referring to FIG. 24, FIG. 24 exemplarily provides a network device 2400 in an embodiment of the present disclosure, including a memory 2401, a transceiver 2402, and a processor 2403; where:
the memory 2401, configured to store a computer program;
the transceiver 2402, configured to transmit and receive data under control of the processor 2403;
the processor 2403, configured to read the computer program in the memory and perform the following operations:
   receiving, after determining that its own node has been started up, a node state message sent by a first network node;
   updating currently maintained first network node information based on the node state message; where the first network node information includes a topology relationship of started-up nodes and corresponding node service information.

In an optional implementation, the processor 2403 determines that its own node has been started up by the following manner:
if it is confirmed that a first NAR function is started up after at least one first specific network element function is started up, then determining that its own node has been started up; where the first specific network element function includes at least one of a control management function or a data forwarding function; or
if it is confirmed that the at least one first specific network element function is started up after the first NAR function is started up, then determining that its own node has been started up.

In an optional implementation, the processor 2403 is specifically configured to:
send a network element function discovery request message to a first management network element after determining that the first NAR function is started up, and confirm that the at least one first specific network element function is started up based on a received network element function registration state update message sent by the first management network element; where the first management network element supports network element function service management, the network element function discovery request message carries a network element identification list and a state change subscription message for a network element function state to be monitored; or
send a state change subscription request message to a first management network element after determining that the first NAR function is started up, and confirm that the at least one first specific network element function is started up based on a received network element function registration state update message sent by the first management network element; where the state change subscription request message carries the network element identification list for the network element function state to be monitored.

In an optional implementation, the processor 2403 is specifically configured to:
receive, after determining that its own node has been started up, the node state message sent by the another network node through a first target network element supporting a first NAR function;
where the node state message includes at least one of a node registration message, a node deregistration message, a node information update message, or a state monitoring response message.

In an optional implementation, the node registration message carries node service information of the another network node; the node registration message is sent by a second target network element supporting a second NAR function after the another network node determines that its own node has been started up;
where the node service information includes at least one of network node identification information, network node address information, network node attribute information, network node location information, network node service area information, data network information, or slice information.

In an optional implementation, the node state message includes the node registration message, the processor 2403, after updating the currently maintained first network node information based on the node state message, is further configured to:
determine first location information of the another network node relative to a target network node based on the updated topology relationship of the started-up nodes;
determine a node registration response message based on the first location information, and send the node registration response message to the another network node; where the node registration response message includes at least one of node service information of the target network node, node service information of a neighboring network node that is connected to the another network node and has been started up, or a topology relationship of nodes.

In an optional implementation, the node state message includes the node registration message, the processor 2403, after updating the currently maintained first network node information based on the node state message, is further configured to:
determine a neighboring network node that is connected to the another network node and has been started up, and first location information and second location information of the another network node and the neighboring network node respective relative to the target network node based on the updated topology relationship of the started-up nodes; and
determine a node information update notification based on the first location information and the second location information, and send the node information update notification to the neighboring network node; where the node information update notification message carries at least one of node service information of the another network node, or a topology relationship of nodes.

In an optional implementation, the node deregistration message is sent by a second management network element supporting a second NAR function before the another network node determines deregistration of its own node based on a local policy or a received deregistration instruction.

In an optional implementation, the processor 2403 is specifically configured to:
determine third location information of the another network node and fourth location information of a neighboring network node that is connected to the another network node and has been started up, based on the currently maintained first network node information; and
determine a corresponding update strategy based on the third location information and the fourth location information, and update the currently maintained first network node information by adopting the determined update strategy.

In an optional implementation, the processor 2403 is specifically configured to:
if it is determined that the another network node is directly connected to the target network node, and the neighboring network node is directly connected to the target network node, then disconnect a connection between the another network node and the target network node, and a connection between the another network node and the neighboring network node;
if it is determined that the another network node is directly connected to the target network node, and the neighboring network node is indirectly connected to the target network node through the another network node, then connect the neighboring network node to the target network node after disconnecting the connection between the another network node and the target network node, and the connection between the another network node and the neighboring network node; and
if it is determined that the another network node is indirectly connected to the target network node, and the neighboring network node includes a first network node located between the target network node and the another network node and a second network node that is indirectly connected to the first network node via the another network node, then connect the first network node to the second network node after disconnecting a connection between the another network node and the first network node, and a connection between the another network node and the second network node.

In an optional implementation, the node information update message is sent by a second management network element supporting a second NAR function after the another network node determines that node information it maintains has been changed; where a change of the node information include a change of the node service information.

In an optional implementation, the state monitoring response message is sent by the another network node through a second management network element supporting a second NAR function after receiving a state monitoring request message periodically sent by the target network node.

In an optional implementation, the target network node is a centralized network node and/or a distributed network node in a distributed network.

In an optional implementation, each network node in the distributed network judges whether it is a centralized network node by using network node attribute information in the corresponding node service information.

In an optional implementation, if the target network node is a distributed network node, after the target network node determines that it has been started up through the first target network element, the processor 2403 is specifically configured to:
send a node registration message carrying node service information of the target network node to any started-up network node in the distributed network.

In FIG. 24, the bus architecture can include any number of interconnected buses and bridges, specifically link various circuits of one or more processors represented by processor 2403 and memories represented by memory 2401 together. The bus architecture can also link various other circuits such as peripheral devices, voltage regulators, and power management circuits together, which are well-known in this field. Therefore, this article will not further describe them. The bus interface provides interfaces. The transceiver 2402 can be multiple components, including a transmitter and a receiver, and provide a unit for communicating with various other apparatuses over transmission media, the transmission media includes wireless channels, wired channels, optical cables, and other transmission media. For different user devices, the interface can also be an interface that can connect external and internal devices, including but not limited to keyboards, displays, speakers, microphones, joysticks, etc.

The processor 2403 is responsible for managing the bus architecture and usual processing, while the memory 2401 can store data used by the processor 2403 when performing operations.

Optionally, the processor 2403 can be a central processing unit (Central Processing Unit, CPU), an application specific integrated circuit (Application Specific Integrated Circuit, ASIC), a field programmable gate array (Field Programmable Gate Array, FPGA), or a complex programmable logic device (Complex Programmable Logic Device, CPLD), and the processor can also use a multi-core architecture.

The processor 2403 calls a computer program stored in the memory to execute any method provided by an embodiment of the present disclosure according to obtained executable instructions. The processor and the memory can also be arranged in a physically separate manner.

Based on the same inventive concept as the above-mentioned method embodiments of the present disclosure, an embodiment in the present disclosure also provides another network device. The principle of problem solving by the network device is similar to a maintenance method for the network node information implemented on the above first network node side. Therefore, the implementation of the network device can refer to the implementation of the maintenance method for the network node information corresponding to the above another network node side, and the repetition will not be repeated here.

Referring to FIG. 25, FIG. 25 exemplarily provides a network device 2500 in an embodiment of the present disclosure, including a memory 2501, a transceiver 2502, and a processor 2503; where:
the memory 2501, configured to store a computer program;
the transceiver 2502, configured to transmit and receive data under control of the processor 2403;
the processor 2503, configured to read the computer program in the memory and perform the following operations:
   sending, after determining that its own node has been started up, a node state message to a target network node, where a first network node is any network node except for the target network node in a distributed network; and
   receiving a target response message sent by the target network node, and performing a corresponding operation based on the target response message; where the target response message is determined by the target network node after updating first network node information based on the node state message, the first network node information includes a topology relationship of started-up nodes and corresponding node service information.

In an optional implementation, the processor 2503 determines that it has been started up by the following manner:
if it is confirmed that a second NAR function is started up after at least one second specific network element function is started up, then determine that its own node has been started up; where the second specific network element function includes at least one of a control management function or a data forwarding function; or
if it is confirmed that at least one second specific network element function is started up after the second NAR function is started up, then determine that its own node has been started up.

In an optional implementation, the processor 2503 is specifically configured to:
send a network element function discovery request message to a second management network element after determining that the second NAR function is started up, and confirm that the at least one second specific network element function is started up based on a received network element function registration state update message sent by the second management network element; where the second management network element supports network element function service management; the network element function discovery request message carries a network element identification list and a state change subscription message for a network element function state to be monitored; or
send a state change subscription request message to a second management network element after determining that the second NAR function is started up, and confirm that the at least one second specific network element function is started up based on a received network element function registration state update message sent by the second management network element; where the state change subscription request message carries the network element identification list for the network element function state to be monitored.

In an optional implementation, the processor 2503 is specifically configured to:
send, after determining that its own node has been started up, the node state message to the target network node through a second target network element supporting a second NAR function;
where the node state message includes at least one of a node registration message, a node deregistration message, a node information update message, or a state monitoring response message.

In an optional implementation, the node registration message carries the node service information of the first network node;
where the node service information includes at least one of network node identification information, network node address information, network node attribute information, network node location information, network node service area information, data network information, or slice information.

In an optional implementation, the node deregistration message is determined based on a local policy or a received deregistration instruction.

In an optional implementation, the node information update message is determined after it is determined that node information it maintains has been changed.

In an optional implementation, the state monitoring response message is determined after a state monitoring request message periodically sent by the target network node is received.

In an optional implementation, the processor 2503 is specifically configured to:
receive the target response message sent by the target network node; where the target response message includes a node registration response message carrying node service information of the target network node, node service information of a neighboring network node adjacent to the first network node, and the topology relationship of nodes; and
update currently maintained second network node information based on the target response message; where the network node information includes a topology relationship of started-up nodes and corresponding node service information.

In FIG. 25, the bus architecture can include any number of interconnected buses and bridges, specifically link various circuits of one or more processors represented by processor 2503 and memories represented by memory 2501 together. The bus architecture can also link various other circuits such as peripheral devices, voltage regulators, and power management circuits together, which are well-known in this field. Therefore, this article will not further describe them. The bus interface provides interfaces. The transceiver 2502 can be multiple components, including a transmitter and a receiver, and provide a unit for communicating with various other apparatuses over transmission media, the transmission media includes wireless channels, wired channels, optical cables, and other transmission media. For different user devices, the interface can also be an interface that can connect external and internal devices, including but not limited to keyboards, displays, speakers, microphones, joysticks, etc.

The processor 2503 is responsible for managing the bus architecture and usual processing, while the memory 2501 can store data used by the processor 2503 when performing operations.

Optionally, the processor 2503 can be CPU, ASIC, FPGA, or CPLD, and the processor can also use a multi-core architecture.

The processor 2503 calls a computer program stored in the memory to execute any method provided by an embodiment of the present disclosure according to obtained executable instructions. The processor and the memory can also be arranged in a physically separate manner.

Based on the same inventive concept as the above-mentioned method embodiments of the present disclosure, an embodiment in the present disclosure also provides a maintenance apparatus for network node information. The principle of problem solving by the apparatus is similar to a maintenance method for the network node information implemented on the above target network node side. Therefore, the implementation of the apparatus can refer to the implementation of the maintenance method for the network node information corresponding to the above target network node side, and the repetition will not be repeated here.

Referring to FIG. 26, FIG. 26 exemplarily provides a maintenance apparatus 2600 for network node information provided by an embodiment of the present disclosure. The apparatus 2600 includes:
a receiving module 2601, configured to receive, after determining that its own node has been started up, a node state message sent by a first network node;
an updating module 2602, configured to update currently maintained first network node information based on the node state message; where the first network node information includes a topology relationship of started-up nodes and corresponding node service information.

In an optional implementation, the receiving module 2601 determines that its own node has been started up by the following manner:
if it is confirmed that a first NAR function is started up after at least one first specific network element function is started up, then determining that its own node has been started up; where the first specific network element function includes at least one of a control management function or a data forwarding function; or
if it is confirmed that the at least one first specific network element function is started up after the first NAR function is started up, then determining that its own node has been started up.

In an optional implementation, the receiving module 2601 is specifically configured to:
send a network element function discovery request message to a first management network element after determining that the first NAR function is started up, and confirm that the at least one first specific network element function is started up based on a received network element function registration state update message sent by the first management network element; where the first management network element supports network element function service management, the network element function discovery request message carries a network element identification list and a state change subscription message for a network element function state to be monitored; or
send a state change subscription request message to a first management network element after determining that the first NAR function is started up, and confirm that the at least one first specific network element function is started up based on a received network element function registration state update message sent by the first management network element; where the state change subscription request message carries the network element identification list for the network element function state to be monitored.

In an optional implementation, the receiving module 2601 is specifically configured to:
receive, after determining that its own node has been started up, the node state message sent by the another network node through a first target network element supporting a first NAR function;
where the node state message includes at least one of a node registration message, a node deregistration message, a node information update message, or a state monitoring response message.

In an optional implementation, the node registration message carries node service information of the another network node; the node registration message is sent by a second target network element supporting a second NAR function after the another network node determines that its own node has been started up;
where the node service information includes at least one of network node identification information, network node address information, network node attribute information, network node location information, network node service area information, data network information, or slice information.

In an optional implementation, the node state message includes the node registration message, the updating module 2602, after updating the currently maintained first network node information, is further configured to:
determine first location information of the another network node relative to a target network node based on the updated topology relationship of the started-up nodes;
determine a node registration response message based on the first location information, and send the node registration response message to the another network node; where the node registration response message includes at least one of node service information of the target network node, node service information of a neighboring network node that is connected to the another network node and has been started up, or a topology relationship of nodes.

In an optional implementation, the node state message includes the node registration message, the updating module 2602, after updating the currently maintained first network node information, is further configured to:
determine a neighboring network node that is connected to the another network node and has been started up, and first location information and second location information of the another network node and the neighboring network node respective relative to the target network node based on the updated topology relationship of the started-up nodes; and
determine a node information update notification based on the first location information and the second location information, and send the node information update notification to the neighboring network node; where, the node information update notification includes at least one of node service information of the another network node, or a topology relationship of nodes.

In an optional implementation, the node deregistration message is sent by a second management network element supporting a second NAR function before the another network node determines deregistration of its own node based on a local policy or a received deregistration instruction.

In an optional implementation, the node state message includes the node deregistration message, the updating module 2602 is specifically configured to:
determine third location information of the another network node and fourth location information of a neighboring network node that is connected to the another network node and has been started up, based on the currently maintained first network node information; and
determine a corresponding update strategy based on the third location information and the fourth location information, and update the currently maintained first network node information by adopting the determined update strategy.

In an optional implementation, the updating module 2602 is specifically configured to:
if it is determined that the another network node is directly connected to the target network node, and the neighboring network node is directly connected to the target network node, then disconnect a connection between the another network node and the target network node, and a connection between the another network node and the neighboring network node;
if it is determined that the another network node is directly connected to the target network node, and the neighboring network node is indirectly connected to the target network node through the another network node, then connect the neighboring network node to the target network node after disconnecting the connection between the another network node and the target network node, and the connection between the another network node and the neighboring network node; and
if it is determined that the another network node is indirectly connected to the target network node, and the neighboring network node includes a first network node located between the target network node and the another network node and a second network node that is indirectly connected to the first network node via the another network node, then connect the first network node to the second network node after disconnecting a connection between the another network node and the first network node, and a connection between the another network node and the second network node.

In an optional implementation, the node information update message is sent by a second management network element supporting a second NAR function after the another network node determines that node information it maintains has been changed; where a change of the node information include a change of the node service information.

In an optional implementation, the state monitoring response message is sent by the another network node through a second management network element supporting a second NAR function after receiving a state monitoring request message periodically sent by the target network node.

In an optional implementation, the target network node is a centralized network node and/or a distributed network node in a distributed network.

In an optional implementation, each network node in the distributed network judges whether it is a centralized network node by using network node attribute information in the corresponding node service information.

In an optional implementation, if the target network node is a distributed network node, the target network node, after determining that it has been started up through the first target network element, is further configured to:
send a node registration message carrying node service information of the target network node to any started-up network node in the distributed network.

Based on the same inventive concept as the above-mentioned method embodiments of the present disclosure, an embodiment in the present disclosure also provides a maintenance apparatus for network node information. The principle of problem solving by the apparatus is similar to a maintenance method for the network node information implemented on the above first network node side. Therefore, the implementation of the apparatus can refer to the implementation of the maintenance method for the network node information corresponding to the above first network node side, and the repetition will not be repeated here.

Referring to FIG. 27, FIG. 27 exemplarily provides a maintenance apparatus 2700 for network node information provided by an embodiment of the present disclosure. The apparatus 2700 includes:
a sending module 2701, configured to send, after determining that its own node has been started up, a node state message to a target network node, where a first network node is any network node except for the target network node in a distributed network; and
an execution module 2702, configured to receive a target response message sent by the target network node, and perform a corresponding operation based on the target response message; where the target response message is determined by the target network node after updating first network node information based on the node state message, the first network node information includes a topology relationship of started-up nodes and corresponding node service information.

In an optional implementation, the sending module 2701 determines that it has been started up by the following manner:
if it is confirmed that a second NAR function is started up after at least one second specific network element function is started up, then determine that its own node has been started up; where the second specific network element function includes at least one of a control management function or a data forwarding function; or
if it is confirmed that at least one second specific network element function is started up after the second NAR function is started up, then determine that its own node has been started up.

In an optional implementation, the sending module 2701 is specifically configured to:
send a network element function discovery request message to a second management network element after determining that the second NAR function is started up, and confirm that the at least one second specific network element function is started up based on a received network element function registration state update message sent by the second management network element; where the network element function discovery request message carries a network element identification list and a state change subscription message for a network element function state to be monitored; or
send a state change subscription request message to a second management network element after determining that the second NAR function is started up, and confirm that the at least one second specific network element function is started up based on a received network element function registration state update message sent by the second management network element; where the state change subscription request message carries the network element identification list for the network element function state to be monitored.

In an optional implementation, the sending module 2701 is specifically configured to:
send, after determining that its own node has been started up, the node state message to the target network node through a second target network element supporting a second NAR function;
where the node state message includes at least one of a node registration message, a node deregistration message, a node information update message, or a state monitoring response message.

In an optional implementation, the node registration message carries the node service information of the first network node;
where the node service information includes at least one of network node identification information, network node address information, network node attribute information, network node location information, network node service area information, data network information, or slice information.

In an optional implementation, the node deregistration message is determined based on a local policy or a received deregistration instruction.

In an optional implementation, the node information update message is determined after it is determined that node information it maintains has been changed.

In an optional implementation, the state monitoring response message is determined after a state monitoring request message periodically sent by the target network node is received.

In an optional implementation, the execution module 2702 is specifically configured to:
receive the target response message sent by the target network node; where the target response message includes a node registration response message carrying node service information of the target network node, node service information of a neighboring network node adjacent to the first network node, and the topology relationship of nodes; and
update currently maintained second network node information based on the target response message; where the second network node information includes a topology relationship with an adjacent node that has been started up and corresponding node service information.

It should be noted that a division of modules in the embodiment of the present disclosure is illustrative and only a logical functional division. In an actual implementation, there may be other division methods. In addition, various functional modules in various embodiments of the present disclosure can be integrated into one processing module; or various modules can exist alone physically; or two or more modules can be integrated into one module. The above-mentioned integrated module can be implemented in the form of hardware or software functional modules.

If the integrated module is implemented in the form of a software functional module and is sold or used as an independent product, it can be stored in a processor-readable storage medium. Based on this understanding, a technical solution of the present disclosure can essentially be embodied in the form of a software product, or a contribution part of the technical solutions of the present disclosure to the prior art can be embodied in the form of the software product, or all or part of the technical solutions of the present disclosure can be embodied in the form of the software product. The computer software product is stored in a storage medium and includes several instructions for causing a computer device (which may be a personal computer, server, or network device, etc.) or the processor (processor) to perform all or part of steps of the methods described in various embodiments of the present disclosure. The aforementioned storage media include various media that can store program codes, such as a USB flash disk, a portable hard disk, a read-only memory (Read-Only Memory, ROM), a random access memory (Random Access Memory, RAM), a magnetic disk, or an optical disk, etc.

It should be noted that the above apparatus provided by the embodiment of the present disclosure can implement all the method steps implemented in the above method embodiments and achieve the same technical effects. Therefore, specific descriptions of the same parts and beneficial effects as the method embodiments will not be repeated here in the present embodiment.

In addition, an embodiment in the present disclosure also provides a computer-readable storage medium, which stores a computer program for causing a computer to execute any one of the above data analysis methods.

The computer-readable storage medium may be any available medium or data storage device that a computer can access, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD), etc.) etc.

The person skilled in the art should understand that the embodiments of the present disclosure can be provided as methods, systems, or computer program products. Therefore, the present disclosure may take the form of a fully hardware embodiment, a fully software embodiment, or a combination of software and hardware embodiments. Moreover, the present disclosure may take the form of a computer program product implemented on one or more computer usable storage media (including but not limited to a disk memory, CD-ROM and an optical memory) containing computer usable program codes.

The present disclosure is described with reference to the flowcharts and/or block diagrams of the methods, devices (systems), and computer program products according to the embodiments of the present disclosure. It should be understood that each process and/or block in the flowchart(s) and/or block diagram(s), as well as a combination of processes and/or blocks in the flowchart(s) and/or block diagram(s), can be implemented by computer program instructions. These computer program instructions can be provided to a processor of a general-purpose computer, specialized computer, embedded processor, or other programmable data processing devices to generate a machine, so that the instructions executed by the processor of the computer or other programmable data processing device generate an apparatus for implementing functions specified in one or more processes in the flowchart(s) and/or one or more blocks in the block diagram(s).

These computer program instructions can also be stored in computer-readable memory that can guide a computer or other programmable data processing devices to operate in a specific manner, so that the instructions stored in the computer-readable memory generate a manufactured product including an instruction apparatus, which implements the functions specified one or more processes in the flowchart(s), and/or, one or more blocks in the block diagram(s).

These computer program instructions can also be loaded onto a computer or other programmable data processing devices, so that a series of operational steps can be executed on the computer or other programmable devices to generate computer implemented processing. Thereby, the instructions executed on the computer or other programmable devices provide steps for implementing the functions specified in one or more processes in the flowchart(s) and/or one or more blocks in the block diagram(s).

Obviously, the person skilled in the art can make various modifications and variations to the present disclosure without departing from the spirit and scope of this disclosure. In this way, if these modifications and variations disclosed herein fall within the scope of the claims and their equivalent technologies, then the present disclosure is also intended to include these modifications and variations.

## Claims

1. A maintenance method for network node information, comprising:
receiving, by a target network node after determining that its own node is started up, a node state message sent by another network node; and
updating, by the target network node, currently maintained first network node information based on the node state message; wherein the first network node information comprises a topology relationship of started-up nodes and corresponding node service information.

2. The method according to claim 1, wherein the target network node determines that its own node has been started up by the following manner:
if the target network node confirms that a first node auto register NAR function is started up after at least one first specific network element function is started up, then determining that its own node has been started up; wherein the first specific network element function comprises at least one of a control management function or a data forwarding function; or
if the target network node confirms that the at least one first specific network element function is started up after the first NAR function is started up, then determining that its own node has been started up.

3. The method according to claim 2, wherein the confirming, by the target network node, that the at least one first specific network element function is started up after the first NAR function is started up, comprises:
sending, by the target network node, a network element function discovery request message to a first management network element after determining that the first NAR function is started up, and confirming that the at least one first specific network element function is started up based on a received network element function registration state update message sent by the first management network element; wherein the network element function discovery request message carries a network element identification list and a state change subscription message for a network element function state to be monitored; or
sending, by the target network node, a state change subscription request message to a first management network element after determining that the first NAR function is started up, and confirming that the at least one first specific network element function is started up based on a received network element function registration state update message sent by the first management network element; wherein the state change subscription request message carries the network element identification list for the network element function state to be monitored.

4. The method according to claim 1, wherein the receiving, by the target network node after determining that its own node has been started up, the node state message sent by the another network node, comprises:
receiving after determining that its own node has been started up, by the target network node, the node state message sent by the another network node through a first target network element supporting a first NAR function;
wherein the node state message comprises at least one of a node registration message, a node deregistration message, a node information update message, or a state monitoring response message.

5. The method according to claim 4, wherein the node registration message carries node service information of the another network node;
wherein the node service information comprises at least one of network node identification information, network node address information, network node attribute information, network node location information, network node service area information, data network information, or slice information.

6. The method according to claim 4 or 5, wherein the node state message comprises the node registration message, and after the updating, by the target network node, the currently maintained first network node information based on the node state message, the method further comprises:
determining, by the target network node, first location information of the another network node relative to the target network node based on the updated topology relationship of the started-up nodes; and
determining, by the target network node, a node registration response message based on the first location information, and sending the node registration response message to the another network node; wherein the node registration response message comprises at least one of node service information of the target network node, node service information of a neighboring network node that is connected to the another network node and has been started up, or a topology relationship of nodes.

7. The method according to claim 4 or 5, wherein the node state message comprises the node registration message, and after the updating, by the target network node, the currently maintained first network node information based on the node state message, the method further comprises:
determining, by the target network node, a neighboring network node that is connected to the another network node and has been started up, and first location information and second location information of the another network node and the neighboring network node respective relative to the target network node based on the updated topology relationship of the started-up nodes; and
determining, by the target network node, a node information update notification based on the first location information and the second location information, and sending the node information update notification to the neighboring network node; wherein the node information update notification comprises at least one of node service information of the another network node, or a topology relationship of nodes.

8. The method according to claim 4, wherein the node deregistration message is sent by a second management network element supporting a second NAR function before the another network node determines deregistration of its own node based on a local policy or a received deregistration instruction.

9. The method according to claim 4 or 8, wherein the node state message comprises the node deregistration message, and the updating, by the target network node, the currently maintained first network node information based on the node state message, comprises:
determining, by the target network node, third location information of the another network node and fourth location information of a neighboring network node that is connected to the another network node and has been started up, based on the currently maintained first network node information; and
determining, by the target network node, a corresponding update strategy based on the third location information and the fourth location information, and updating the currently maintained first network node information by adopting the determined update strategy.

10. The method according to claim 4, wherein the node information update message is sent by a second management network element supporting a second NAR function after the another network node determines that node information it maintains has been changed.

11. The method according to claim 4, wherein the state monitoring response message is sent by the another network node through a second management network element supporting a second NAR function after receiving a state monitoring request message periodically sent by the target network node.

12. The method according to any one of claims 1-5, 8 and 10-11, wherein the target network node is a centralized network node and/or a distributed network node in a distributed network.

13. A maintenance method for network node information, comprising:
sending, by a first network node after determining that its own node has been started up, a node state message to a target network node, wherein the first network node is any network node except for the target network node in a distributed network; and
receiving, by the first network node, a target response message sent by the target network node, and performing a corresponding operation based on the target response message; wherein the target response message is determined by the target network node after updating first network node information based on the node state message, the first network node information comprises a topology relationship of started-up nodes and corresponding node service information.

14. The method according to claim 13, wherein the first network node determines that it has been started up by the following manner:
if the first network node confirms that a second NAR function is started up after at least one second specific network element function is started up, then determining that its own node has been started up; wherein the second specific network element function comprises at least one of a control management function or a data forwarding function; or
if the first network node confirms that at least one second specific network element function is started up after the second NAR function is started up, then determining that its own node has been started up.

15. The method according to claim 14, wherein the confirming, by the first network node, that the at least one second specific network element function is started up after the second NAR function is started up, comprises:
sending, by the first network node, a network element function discovery request message to a second management network element after determining that the second NAR function is started up, and confirming that the at least one second specific network element function is started up based on a received network element function registration state update message sent by the second management network element; wherein the network element function discovery request message carries a network element identification list and a state change subscription message for a network element function state to be monitored; or
sending, by the first network node, a state change subscription request message to a second management network element after determining that the second NAR function is started up, and confirming that the at least one second specific network element function is started up based on a received network element function registration state update message sent by the second management network element; wherein the state change subscription request message carries the network element identification list for the network element function state to be monitored.

16. The method according to claim 13, wherein the sending, by the first network node after determining that its own node has been started up, the node state message to the target network node, comprises:
sending, by the first network node after determining that its own node has been started up, the node state message to the target network node through a second target network element supporting a second NAR function;
wherein the node state message comprises at least one of a node registration message, a node deregistration message, a node information update message, or a state monitoring response message.

17. The method according to claim 16, wherein the node registration message carries node service information of the first network node;
wherein the node service information comprises at least one of network node identification information, network node address information, network node attribute information, network node location information, network node service area information, data network information, or slice information.

18. The method according to claim 16, wherein the node deregistration message is determined by the first network node based on a local policy or a received deregistration instruction.

19. The method according to claim 16, wherein the node information update message is determined by the first network node after determining that node information it maintains has been changed.

20. The method according to claim 16, wherein the state monitoring response message is determined by the first network node after receiving a state monitoring request message periodically sent by the target network node.

21. The method according to any one of claims 13-20, wherein the receiving, by the first network node, the target response message sent by the target network node, and performing the corresponding operation based on the target response message, comprises:
receiving, by the first network node, the target response message sent by the target network node; wherein the target response message comprises a node registration response message carrying node service information of the target network node, node service information of a neighboring network node adjacent to the first network node, and the topology relationship of nodes; and
updating, by the first network node, currently maintained second network node information based on the target response message; wherein the second network node information comprises a topology relationship with an adjacent node that has been started up and corresponding node service information.

22. A maintenance apparatus for network node information, comprising:
a receiving module, configured to receive, after determining that its own node has been started up, a node state message sent by another network node; and
an updating module, configured to update currently maintained first network node information based on the node state message; wherein the first network node information comprises a topology relationship of started-up nodes and corresponding node service information.

23. The apparatus according to claim 22, wherein the receiving module determines that its own node has been started up by the following manner:
if it is confirmed that a first node auto register NAR function is started up after at least one first specific network element function is started up, then determine that its own node has been started up; wherein the first specific network element function comprises at least one of a control management function or a data forwarding function; or
if it is confirmed that the at least one first specific network element function is started up after the first NAR function is started up, then determine that its own node has been started up.

24. The apparatus according to claim 22, wherein the receiving module is specifically configured to:
Receive, after determining that its own node has been started up, the node state message sent by the another network node through a first target network element supporting a first NAR function;
wherein the node state message comprises at least one of a node registration message, a node deregistration message, a node information update message, or a state monitoring response message.

25. The apparatus according to claim 24, wherein the node registration message carries node service information of the another network node;
wherein the node service information comprises at least one of network node identification information, network node address information, network node attribute information, network node location information, network node service area information, data network information, or slice information.

26. The apparatus according to claim 24 or 25, wherein the node state message comprises the node registration message, the updating module is further configured to:
determine first location information of the another network node relative to a target network node based on the updated topology relationship of the started-up nodes; and
determine a node registration response message based on the first location information, and send the node registration response message to the another network node; wherein the node registration response message comprises at least one of node service information of the target network node, node service information of a neighboring network node that is connected to the another network node and has been started up, or a topology relationship of nodes.

27. The apparatus according to claim 24 or 25, wherein the node state message comprises the node registration message, the updating module is further configured to:
determine a neighboring network node that is connected to the another network node and has been started up, and first location information and second location information of the another network node and the neighboring network node respective relative to a target network node based on the updated topology relationship of the started-up nodes; and
determine a node information update notification based on the first location information and the second location information, and send the node information update notification to the neighboring network node; wherein the node information update notification comprises at least one of node service information of the another network node, or a topology relationship of nodes.

28. The apparatus according to claim 22, wherein the node state message comprises a node deregistration message, the updating module is specifically configured to:
determine third location information of the another network node and fourth location information of a neighboring network node that is connected to the another network node and has been started up, based on the currently maintained first network node information; and
determine a corresponding update strategy based on the third location information and the fourth location information, and update the currently maintained first network node information by adopting the determined update strategy.

29. A maintenance apparatus for network node information, comprising:
a sending module, configured to send, after determining that its own node has been started up, a node state message to a target network node, wherein the first network node is any network node except for the target network node in a distributed network; and
an execution module, configured to receive a target response message sent by the target network node, and perform a corresponding operation based on the target response message; wherein the target response message is determined by the target network node after updating first network node information based on the node state message, the first network node information comprises a topology relationship of started-up nodes and corresponding node service information.

30. The apparatus according to claim 29, wherein the sending module determines that its own node has been started up by the following manner:
if it is confirmed that a second NAR function is started up after at least one second specific network element function is started up, then determine that its own node has been started up; wherein the second specific network element function comprises at least one of a control management function or a data forwarding function; or
if it is confirmed that at least one second specific network element function is started up after the second NAR function is started up, then determine that its own node has been started up.

31. The apparatus according to claim 29, wherein the sending module is specifically configured to:
send, after determining that its own node has been started up, the node state message to a target network node through a second target network element supporting a second NAR function;
wherein the node state message comprises at least one of a node registration message, a node deregistration message, a node information update message, or a state monitoring response message.

32. The apparatus according to claim 31, wherein the node registration message carries node service information of the first network node;
wherein the node service information comprises at least one of network node identification information, network node address information, network node attribute information, network node location information, network node service area information, data network information, or slice information.

33. The apparatus according to claim 29, wherein the execution module is specifically configured to:
receive the target response message sent by the target network node; wherein the target response message comprises a node registration response message carrying node service information of the target network node, node service information of a neighboring network node adjacent to the first network node, and the topology relationship of nodes; and
update currently maintained second network node information based on the target response message; wherein the second network node information comprises a topology relationship with an adjacent node that has been started up and corresponding node service information.

34. A network device, comprising: a memory, a transceiver and a processor; wherein the memory is configured to store a computer program; the transceiver is configured to transmit and receive data under control of the processor; and the processor is configured to read the computer program in the memory and perform the method according to any one of claims 1-12.

35. A network device, comprising: a memory, a transceiver and a processor; wherein the memory is configured to store a computer program; the transceiver is configured to transmit and receive data under control of the processor; and the processor is configured to read the computer program in the memory and perform the method according to any one of claims 13-21.

36. A computer-readable storage medium, wherein the computer-readable storage medium stores a computer program, the computer program is used to enable the computer to execute the method according to any one of claims 1-12, and the method according to any one of claims 13-21.
